(19) Europäisches Patentamt
European Patent Office
Office européen des brevets

(11) **EP 3 901 102 A1**

(12) **EUROPEAN PATENT APPLICATION**
published in accordance with Art. 153(4) EPC

(43) Date of publication:
**27.10.2021 Bulletin 2021/43**

(51) Int Cl.:
*C01G 53/00* (2006.01)          *H01M 4/36* (2006.01)
*H01M 4/505* (2010.01)          *H01M 4/525* (2010.01)

(21) Application number: **19900229.6**

(22) Date of filing: **20.12.2019**

(86) International application number:
**PCT/JP2019/050067**

(87) International publication number:
**WO 2020/130129 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2018 JP 2018238845**

(71) Applicants:
• **SUMITOMO CHEMICAL COMPANY LIMITED**
**Chuo-ku**
**Tokyo 104-8260 (JP)**
• **Tanaka Chemical Corporation**
**Fukui-shi, Fukui 910-3131 (JP)**

(72) Inventor: **NAGAO Daisuke**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **LITHIUM SECONDARY BATTERY POSITIVE ELECTRODE ACTIVE MATERIAL PRECURSOR, METHOD FOR PRODUCING LITHIUM SECONDARY BATTERY POSITIVE ELECTRODE ACTIVE MATERIAL PRECURSOR, AND METHOD FOR PRODUCING LITHIUM SECONDARY BATTERY POSITIVE ELECTRODE ACTIVE MATERIAL**

(57) A positive electrode active material precursor for a lithium secondary battery, in which the following requirements (1) and (2) are satisfied.

Requirement (1): In powder X-ray diffraction measurement using a CuK$\alpha$ ray, $\alpha/\beta$ that is a ratio of an integrated intensity $\alpha$ of a peak present within a range of a diffraction angle $2\theta = 19.2 \pm 1°$ to an integrated intensity $\beta$ of a peak present within a range of a diffraction angle $2\theta = 33.5 \pm 1°$ is 3.0 or more and 5.8 or less.

Requirement (2): A 10% cumulative volume particle size $D_{10}$ obtained from particle size distribution measurement is 2 $\mu$m or less.

EP 3 901 102 A1

**Description**

[Technical Field]

The present invention relates to a positive electrode active material precursor for a lithium secondary battery, a method for producing a positive electrode active material precursor for a lithium secondary battery, and a method for producing a positive electrode active material for a lithium secondary battery.
Priority is claimed on Japanese Patent Application No. 2018-238845, filed in Japan on December 20, 2018, the content of which is incorporated herein by reference.

[Background Art]

Attempts of putting lithium secondary batteries into practical use not only for small-sized power sources in mobile phone applications, notebook personal computer applications, and the like but also for medium-sized or large-sized power sources in automotive applications, power storage applications, and the like have already been underway. In lithium secondary batteries, a positive electrode active material is used. As the positive electrode active material, a lithium composite metal oxide is used.
A variety of attempts are underway regarding lithium composite metal oxides in order to improve the battery characteristics of lithium secondary batteries. A lithium composite metal oxide is produced by using a composite metal hydroxide containing nickel, cobalt, or the like as a precursor, mixing this precursor and a lithium compound, and calcining the mixture. A lithium composite metal oxide capable of exhibiting desired characteristics can be obtained by controlling the physical properties of a precursor to be obtained in steps for producing the precursor.
For example, Patent Document 1 describes a method for producing a positive electrode active material for a lithium secondary battery including a step of adjusting the particle size distribution of a precursor by pulverizing a hydroxide raw material powder that corresponds to the precursor.

[Citation List]

[Patent Document]

[Patent Document 1]
PCT International Publication No. WO 2014/061580

[Summary of Invention]

[Technical Problem]

In the middle of the proceeding of the application fields of lithium secondary batteries, for positive electrode active materials for lithium secondary batteries, there is a demand for additional improvement in battery characteristics such as the initial charge and discharge efficiency and the discharge rate characteristics.
The present invention has been made in view of the above-described circumstances, and an object of the present invention is to provide a positive electrode active material precursor for a lithium secondary battery that can be used for the production of positive electrode active materials for a lithium secondary battery having improved battery characteristics such as the initial charge and discharge efficiency and the discharge rate characteristics, a method for producing a positive electrode active material precursor for a lithium secondary battery, and a method for producing a positive electrode active material for a lithium secondary battery.

[Solution to Problem]

That is, the present invention includes the following inventions [1] to [10].

[1] A positive electrode active material precursor for a lithium secondary battery, in which the following requirements (1) and (2) are satisfied.

Requirement (1): In powder X-ray diffraction measurement using a CuK$\alpha$ ray, $\alpha/\beta$ that is a ratio of an integrated intensity $\alpha$ of a peak present within a range of a diffraction angle $2\theta = 19.2 \pm 1°$ to an integrated intensity $\beta$ of a peak present within a range of a diffraction angle $2\theta = 33.5 \pm 1°$ is 3.0 or more and 5.8 or less.
Requirement (2): A 10% cumulative volume particle size $D_{10}$ obtained from particle size distribution measurement

is 2 $\mu$m or less.

[2] The positive electrode active material precursor for a lithium secondary battery according to [1], in which the following requirement (3) is further satisfied.

Requirement (3): In powder X-ray diffraction measurement using a CuKa ray, $\beta/\gamma$ that is a ratio of the integrated intensity $\beta$ of the peak present within the range of a diffraction angle $2\theta = 33.5 \pm 1°$ to an integrated intensity $\gamma$ of a peak present within a range of a diffraction angle $2\theta = 38.5 \pm 1°$ is 0.370 or more and 0.500 or less.

[3] The positive electrode active material precursor for a lithium secondary battery according to [1] or [2], in which the following requirement (4) is further satisfied.

Requirement (4): A 50% cumulative volume particle size $D_{50}$ obtained from the particle size distribution measurement is 5 $\mu$m or less.

[4] The positive electrode active material precursor for a lithium secondary battery according to any one of [1] to [3], in which the following requirement (5) is further satisfied.

Requirement (5): A 90% cumulative volume particle size $D_{90}$ obtained from the particle size distribution measurement is 10 $\mu$m or less.

[5] The positive electrode active material precursor for a lithium secondary battery according to any one of [1] to [4], in which the following formula (I) that represents mole ratios of metal elements is satisfied and, in the following formula (I), $0 \leq a \leq 0.4$, $0 \leq b \leq 0.4$, and $0 \leq c \leq 0.1$ are satisfied.

Ni : Co : Mn : $M^1$ = (1 - a - b - c) : a : b : c ... (I) (Here, $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

[6] A method for producing a positive electrode active material precursor for a lithium secondary battery, the method including a pulverization step of pulverizing a raw material powder that satisfies the following requirements (A) to (C).

Requirement (A): The following formula (I) that represents mole ratios of metal elements is satisfied and, in the following formula (I), $0 \leq a \leq 0.4$, $0 \leq b \leq 0.4$, and $0 \leq c \leq 0.1$ are satisfied.

Requirement (B): A 50% cumulative volume particle size $D_{50}$ obtained from the particle size distribution measurement is 2 $\mu$m or more and 20 $\mu$m or less.

Requirement (C): $D_{90}/D_{10}$ that is a ratio of a 90% cumulative volume particle size $D_{90}$ obtained from the particle size distribution measurement to a 10% cumulative volume particle size $D_{10}$ obtained from the particle size distribution measurement is 3 or less.

Ni : Co : Mn : $M^1$ = (1 - a - b - c): a : b : c ... (I) (Here, $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

[7] The method for producing a positive electrode active material precursor for a lithium secondary battery according to [6], in which, when powder X-ray diffraction measurement using a CuK$\alpha$ ray is carried out before and after the pulverization step, the $\alpha/\beta$ that is a ratio of an integrated intensity $\alpha$ of a peak present within a range of a diffraction angle $2\theta = 19.2 \pm 1°$ to an integrated intensity $\beta$ of a peak present within a range of a diffraction angle $2\theta = 33.5 \pm 1°$ is obtained from each measurement, the $\alpha/\beta$ before the pulverization step is represented by A, and the $\alpha/\beta$ after the pulverization step is represented by B, B/A that is a ratio between A and B is 1 or more and 2 or less.

[8] The method for producing a positive electrode active material precursor for a lithium secondary battery according to [6] or [7], in which the pulverization step is carried out using a jet mill or a counter jet mill.

[9] A method for producing a positive electrode active material for a lithium secondary battery, the method including a step of mixing the positive electrode active material precursor for a lithium secondary battery according to any one of [1] to [5] and a lithium compound to obtain a mixture and a step of calcining the mixture.

[10] The method for producing a positive electrode active material for a lithium secondary battery according to [9], in which the positive electrode active material for a lithium secondary battery is represented by the following composition formula (II).

$$Li[Li_x(Ni_{(1-y-z-w)}Co_yMn_zM_w)_{1-x}]O_2 ... \qquad (II)$$

(Here, $-0.1 \leq x \leq 0.2$, $0 \leq y \leq 0.4$, $0 \leq z \leq 0.4$, $0 \leq w \leq 0.1$, and $y + z + w < 1$ are satisfied, and M represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

[Advantageous Effects of Invention]

According to the present invention, it is possible to provide a positive electrode active material precursor for a lithium secondary battery that can be used for the production of positive electrode active material for a lithium secondary battery having improved battery characteristics such as the initial charge and discharge efficiency and the discharge rate characteristics, a method for producing a positive electrode active material precursor for a lithium secondary battery, and a method for producing a positive electrode active material for a lithium secondary battery.

[Brief Description of Drawings]

Fig. 1A is a schematic configuration view showing an example of a lithium-ion secondary battery.
Fig. 1B is a schematic configuration view showing the example of the lithium-ion secondary battery.
Fig. 2 is a graph showing particle size distributions of precursors produced in examples.

[Description of Embodiments]

<Positive electrode active material precursor for a lithium secondary battery >

The present embodiment is a positive electrode active material precursor for a lithium secondary battery. In the following description, the positive electrode active material precursor for a lithium secondary battery of the present embodiment will be abbreviated as "precursor" in some cases.

A positive electrode active material for a lithium secondary battery can be produced by mixing the precursor of the present embodiment and a lithium compound and calcining the mixture.

The precursor of the present embodiment satisfies the following requirement (1) and the following requirement (2).

Requirement (1): In powder X-ray diffraction measurement using a CuK$\alpha$ ray, the ratio ($\alpha/\beta$) of the integrated intensity $\alpha$ of a peak present within a range of a diffraction angle $2\theta$ = 19.2 $\pm$ 1° to the integrated intensity $\beta$ of a peak present within a range of a diffraction angle $2\theta$ = 33.5 $\pm$ 1° is 3.0 or more and 5.8 or less.

Requirement (2): The 10% cumulative volume particle size ($D_{10}$) obtained from particle size distribution measurement is 2 $\mu$m or less.

Hereinafter, each requirement will be described.

[Requirement (1)]

In the precursor of the present embodiment, in powder X-ray diffraction measurement using a CuK$\alpha$ ray, the ratio ($\alpha/\beta$) of the integrated intensity $\alpha$ of a peak present within a range of a diffraction angle $2\theta$ = 19.2 $\pm$ 1° to the integrated intensity $\beta$ of a peak present within a range of a diffraction angle $2\theta$ = 33.5 $\pm$ 1° is 3.0 or more and 5.8 or less.

The peak present within the range of a diffraction angle $2\theta$ = 19.2 $\pm$ 1° is a peak that, in the case of a positive electrode active material precursor for a lithium secondary battery that belongs to a space group P-3m1, corresponds to a (001) plane of a unit lattice, which is the smallest unit in the crystal structure.

The peak present within the range of a diffraction angle $2\theta$ = 33.5 $\pm$ 1° is a peak that, in the case of a positive electrode active material precursor for a lithium secondary battery that belongs to a space group P-3m1, corresponds to a (100) plane of a unit lattice, which is the smallest unit in the crystal structure.

The lower limit value of the ratio ($\alpha/\beta$) is preferably 3.3, more preferably 3.5, and particularly preferably 4.0. The upper limit value of the ratio ($\alpha/\beta$) is preferably 5.6, more preferably 5.4, and particularly preferably 5.0.

The above-described upper limit value and lower limit value can be randomly combined together. As the combination, ratios ($\alpha/\beta$) of 3.3 or more and 5.6 or less, 3.6 or more and 5.4 or less, and 4.0 or more and 5.0 or less are exemplary examples.

The ratio ($\alpha/\beta$) of the precursor of the present embodiment is measured by powder X-ray diffraction measurement.

The powder X-ray diffraction measurement is carried out using an X-ray diffractometer. Specifically, for example, the precursor powder is loaded into a dedicated substrate, and measurement is carried out using a Cu-Kα radiation source, thereby obtaining a powder X-ray diffraction pattern.

After that, using an integrated X-ray powder diffraction software JADE, the ratio ($\alpha/\beta$) of the integrated intensity α of a peak present within a range of a diffraction angle $2\theta = 19.2 \pm 1°$ to the integrated intensity β of a peak present within a range of a diffraction angle $2\theta = 33.5 \pm 1°$ is calculated from the obtained powder X-ray diffraction pattern.

As the X-ray diffractometer, it is possible to use, for example, Ultima IV manufactured by Rigaku Corporation.

An example of the specific measurement conditions for the powder X-ray diffraction measurement will be described below.

(Measurement conditions)

Diffraction angle $2\theta = 10°$ to $90°$

Sampling width: 0.02°
Scan speed: 4 °/min

The precursor that satisfies the requirement (1) has highly isotropic primary particles that are controlled not to be laminated too anisotropically. The positive electrode active material precursor for a lithium secondary battery having a hexagonal crystal structure that belongs to the space group P-3m1 has a crystal structure in which layers that are each formed of transition metal atoms and oxygen atoms are laminated. The smallest unit in the above-described crystal structure is referred to as a unit lattice. The unit lattices connected in a row form a primary particle. The use of a precursor having highly isotropic primary particles makes it possible to produce a positive electrode active material having highly isotropic primary particles. In such a positive electrode active material, the crystal plane of the primary particles where lithium is deintercalated during charging and lithium is intercalated during discharging are uniformly present throughout the positive electrode active material. Therefore, it is considered that the intercalation reaction and the deintercalation reaction of lithium ions occur uniformly. Therefore, it is presumed that the initial charge and discharge efficiency can be improved. Furthermore, when the positive electrode active material has highly isotropic primary particles, it is considered that the straightness of the migration of lithium ions improves during charging and discharging. Therefore, it is presumed that the discharge rate characteristics can be improved.

[Requirement (2)]

In the precursor of the present embodiment, the 10% cumulative volume particle size ($D_{10}$) obtained from the particle size distribution measurement is 2 μm or less. $D_{10}$ is preferably 1.9 μm or less, more preferably 1.7 μm or less, and particularly preferably 1.5 μm or less.

$D_{10}$ is preferably 0.1 μm or more, more preferably 0.2 μm or more, particularly preferably 0.3 μm or more, and still more preferably 0.4 μm or more.

The above-described upper limit value and lower limit value can be randomly combined together.

As the combination, $D_{10}$'s of 0.1 μm or more and 2 μm or less, 0.2 μm or more and 1.9 μm or less, 0.3 μm or more and 1.7 μm or less, and 0.4 μm or more and 1.5 μm or less are exemplary examples.

The cumulative volume particle size distribution of the precursor is measured by the laser diffraction scattering method. A 10 mass% sodium hexametaphosphate aqueous solution (250 μL) is injected as a dispersion medium into a cumulative volume particle size distribution measuring instrument and the particle size distribution is measured, thereby obtaining a volume-based cumulative particle size distribution curve. The precursor powder is injected such that the transmittance at the time of measurement reaches $85 \pm 5\%$.

As the cumulative volume particle size distribution measuring instrument, it is possible to use, for example, MICROTRAC MT3300EXII manufactured by MicrotracBell Corp.

When the obtained cumulative particle size distribution curve ranges from 0% to 100%, the value of the particle diameter at a point at which the cumulative volume from the fine particle side reaches 10% is a 10% cumulative volume particle size ($D_{10}$ (μm)), and the value of the particle diameter at a point at which the cumulative volume from the fine particle side reaches 90% is a 90% cumulative volume particle size ($D_{90}$ (μm)). In addition, the value of the particle diameter at a point at which the cumulative volume from the fine particle side reaches 50% is a 50% cumulative volume particle size ($D_{50}$ (μm)).

The precursor that satisfies the requirement (2) is a powder in which fine particles are present. Here, the "fine particles" refer to, for example, particles having a particle diameter of 2 μm or less. The use of such a precursor makes it possible to produce a positive electrode active material in which the fine particles are present. In such a positive electrode active material, fine particles of the positive electrode active material enter pores formed between the particles of the positive electrode active material. Therefore, it is possible to reduce the presence fraction of pores in which the positive electrode active material is not present. Since the use of such a positive electrode active material makes the positive electrode active material and a conductive material sufficiently come into contact with each other in a positive electrode mixture, the electron conductivity becomes favorable. Therefore, it is presumed that the discharge rate characteristics improve.

The precursor of the present embodiment preferably satisfies the following requirement (3), the following requirement (4), and the following requirement (5) as optional requirements.

[Requirement (3)]

In the precursor of the present embodiment, in the powder X-ray diffraction measurement using a CuKα ray, the ratio (β/γ) of the integrated intensity β of the peak present within the range of a diffraction angle 2θ = 33.5 ± 1° to the integrated intensity γ of a peak within a range of a diffraction angle 2θ = 38.5 ± 1° is 0.370 or more and 0.500 or less.

The peak present within the range of a diffraction angle 2θ = 33.5 ± 1° is a peak that, in the case of a positive electrode active material precursor for a lithium secondary battery that belongs to a space group P-3m1, corresponds to a (100) plane of a unit lattice, which is the smallest unit in the crystal structure.

The peak present within the range of a diffraction angle 2θ = 38.5 ± 1° is a peak that, in the case of a positive electrode active material precursor for a lithium secondary battery that belongs to a space group P-3m1, corresponds to a (101) plane of a unit lattice, which is the smallest unit in the crystal structure.

The fact that the ratio (β/γ) of the integrated intensity γ to the integrated intensity β is small means that the laminated structure of the unit lattices of the precursor is disordered to a small extent. The unit lattices connected in a row form a primary particle. When the laminated structure of the unit lattices is disordered to a small extent, highly crystalline primary particles are formed, and, when the laminated structure of the unit lattices is disordered to a large extent, poorly crystalline primary particles are formed.

The lower limit value of the ratio (β/γ) is preferably 0.380, more preferably 0.400, and particularly preferably 0.420. The upper limit value of the ratio (β/γ) is preferably 0.480.

The above-described upper limit value and lower limit value can be randomly combined together.

As the combination, ratios (β/γ) of 0.380 or more and 0.480 or less, 0.400 or more and 0.480 or less, and 0.420 or more and 0.480 or less are exemplary examples.

The ratio (β/γ) of the precursor of the present embodiment is measured by powder X-ray diffraction measurement.

The powder X-ray diffraction measurement is carried out using an X-ray diffractometer. Specifically, for example, the precursor powder is loaded into a dedicated substrate, and measurement is carried out using a Cu-Kα radiation source, thereby obtaining a powder X-ray diffraction pattern.

After that, using an integrated X-ray powder diffraction software JADE, the ratio (β/γ) of the integrated intensity β of the peak present within the range of a diffraction angle 2θ = 33.5 ± 1° to the integrated intensity y of the peak present within the range of a diffraction angle 2θ = 38.5 ± 1° is calculated from the obtained powder X-ray diffraction diagram.

As the X-ray diffractometer, it is possible to use, for example, Ultima IV manufactured by Rigaku Corporation.

An example of the specific measurement conditions for the powder X-ray diffraction measurement will be described below.

(Measurement conditions)

Diffraction angle 2θ = 10° to 90°

Sampling width: 0.02°
Scan speed: 4 °/min

The precursor that satisfies the requirement (3) has highly crystalline primary particles in which the laminated structure of the unit lattices is disordered to a small extent. The use of such a precursor makes it possible to produce a positive electrode active material in which the crystallinity of the primary particles is high. In such a positive electrode active material, since the laminated structure of the unit lattices is disordered to a small extent during charging and discharging, it is considered that the straightness of the migration of lithium ions improves. Therefore, it is presumed that the discharge rate characteristics can be improved.

[Requirement (4)]

In the precursor of the present embodiment, the 50% cumulative volume particle size ($D_{50}$) obtained from the particle size distribution measurement is preferably 5 μm or less. $D_{50}$ is more preferably 4.5 μm or less, particularly preferably 4.0 μm or less, and still more preferably preferably 3.5 μm or less.

$D_{50}$ is preferably 0.1 μm or more, more preferably 0.2 μm or more, particularly preferably 0.3 μm or more, and still more preferably 0.4 μm or more.

The above-described upper limit value and lower limit value can be randomly combined together.

As the combination, $D_{50}$'s of 0.1 $\mu$m or more and 5 $\mu$m or less, 0.2 $\mu$m or more and 4.5 $\mu$m or less, 0.3 $\mu$m or more and 4.0 $\mu$m or less, and 0.4 $\mu$m or more and 3.5 $\mu$m or less are exemplary examples.

[Requirement (5)]

In the precursor of the present embodiment, the 90% cumulative volume particle size ($D_{90}$) obtained from the particle size distribution measurement is preferably 10 $\mu$m or less. $D_{90}$ is more preferably 8.0 $\mu$m or less, particularly preferably 6.0 $\mu$m or less, and still more preferably 4.0 $\mu$m or less.

$D_{90}$ is preferably 0.1 $\mu$m or more, more preferably 0.2 $\mu$m or more, particularly preferably 0.3 $\mu$m or more, and still more preferably 0.4 $\mu$m or more.

The above-described upper limit value and lower limit value can be randomly combined together.

As the combination, $D_{90}$'s of 0.1 $\mu$m or more and 10 $\mu$m or less, 0.2 $\mu$m or more and 8.0 $\mu$m or less, 0.3 $\mu$m or more and 6.0 $\mu$m or less, and 0.4 $\mu$m or more and 4.0 $\mu$m or less are exemplary examples.

In a positive electrode active material that is produced using the precursor that satisfies the requirement (3), preferably, satisfies any one or both of the requirements (4) and (5), the shapes of secondary particles are likely to become uniform. Therefore, it is considered that a uniform reaction is likely to occur throughout all of the secondary particles and the charge and discharge efficiency improves.

In the precursor of the present embodiment, it is preferable that the following formula (I) that represents the mole ratios of metal elements is satisfied and, in the following formula (I), $0 \leq a \leq 0.4$, $0 \leq b \leq 0.4$, and $0 \leq c \leq 0.1$ are satisfied.

$$Ni : Co : Mn : M^1 = (1 - a - b - c) : a : b : c \ldots \qquad (I)$$

(Here, $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

The composition analysis of the precursor of the present embodiment can be carried out with an inductively coupled plasma emission spectrometer.

As the inductively coupled plasma emission spectrometer, it is possible to use, for example, SPS3000 manufactured by SII NanoTechnology Inc.

· a a in the formula (I) is preferably 0.01 or more, more preferably 0.05 or more, and still more preferably 0.06 or more. a in the formula (I) is preferably 0.40 or less, more preferably 0.35 or less, and still more preferably 0.30 or less. The upper limit value and the lower limit value of a can be randomly combined together.

As the combination, a's of 0.01 or more and 0.40 or less, 0.05 or more and 0.35 or less, and 0.06 or more and 0.30 or less are exemplary examples.

• b b in the formula (I) is preferably 0.01 or more, more preferably 0.02 or more, and still more preferably 0.04 or more. b in the formula (I) is preferably 0.40 or less, more preferably 0.35 or less, and still more preferably 0.30 or less. The upper limit value and the lower limit value of b can be randomly combined together.

As the combination, b's of 0.01 or more and 0.40 or less, 0.02 or more and 0.35 or less, and 0.04 or more and 0.30 or less are exemplary examples.

• c c in the formula (I) may be 0, but is preferably more than 0, more preferably 0.0005 or more, and particularly preferably 0.001 or more. c in the formula (I) is preferably 0.09 or less, more preferably 0.08 or less, and still more preferably 0.07 or less.

The upper limit value and the lower limit value of c can be randomly combined together.

As the combination, c's of more than 0 and 0.09 or less, 0.0005 or more and 0.08 or less, and 0.001 or more and 0.007 or less are exemplary examples.

The $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.

The precursor of the present embodiment may contain one kind of the $M^1$ or may contain two or more kinds of the $M^1$'s.

The composition formula of the precursor of the present embodiment can be represented by $Ni_{(1-a-b-c)}Co_aMn_bM^1_c(OH)_{2+d}$ using a, b, c and the element $M^1$ in the formula (I). The d is appropriately adjusted depending on a chemical composition that a hydroxide of each metal element is capable of taking. d is preferably -0.2 or more and 0.4 or less, more preferably -0.1 or more and 0.35 or less, and particularly preferably 0 or more and 0.3 or less.

That is, the precursor of the present embodiment is preferably represented by the following (formula).

$$Ni_{(1-a-b-c)}Co_aMn_bM^1_c(OH)_{2+d} \qquad \text{(Formula)}$$

(Here, $0 \le a \le 0.4$, $0 \le b \le 0.4$, and $0 \le c \le 0.1$ are satisfied, d is -0.2 or more and 0.4 or less, and $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

<Method for producing positive electrode active material precursor for a lithium secondary battery>

A method for producing the precursor of the present embodiment preferably includes a pulverization step of pulverizing a raw material powder that satisfies the requirements (A) to (C) described below. The raw material powder that is used in the present embodiment is preferably a hydroxide raw material powder or an oxide raw material powder and more preferably a hydroxide raw material powder.

Pulverization of the hydroxide raw material powder or oxide powder in which particles have been grown in advance by a co-precipitation method described below makes it easy to obtain a precursor that satisfies the requirement (1) and the requirement (2).

The method for producing the precursor of the present embodiment preferably includes a raw material powder production step, a washing step, and a raw material powder pulverization step in this order. Hereinafter, the method for producing the precursor of the present embodiment will be abbreviated as "the method for producing a precursor" in some cases.

Hereinafter, each step will be described by taking the case of using the hydroxide raw material powder as an example.

• Hydroxide raw material powder production step

As a hydroxide raw material powder that is produced in the present step, a nickel-containing composite metal hydroxide containing nickel that is an essential metal and an optional metal is an exemplary example. As the optional metal, cobalt and manganese can be exemplified.

Usually, the hydroxide raw material powder can be produced by a well-known batch-type co-precipitation method or continuous co-precipitation method. Hereinafter, the production method thereof will be described in detail by taking as an example a nickel-containing composite metal hydroxide containing, as metals, nickel, cobalt, and manganese (hereinafter, referred to as "hydroxide raw material powder" in some cases).

First, a nickel salt solution, a cobalt salt solution, a manganese salt solution, and a complexing agent are reacted together by the continuous co-precipitation method described in Japanese Unexamined Patent Application, First Publication No. 2002-201028, thereby producing a hydroxide raw material powder that is represented by a composition represented by the formula (I).

A nickel salt that is a solute of the nickel salt solution is not particularly limited, and, for example, any one or more of nickel sulfate, nickel nitrate, nickel chloride, and nickel acetate can be used.

As a cobalt salt that is a solute of the cobalt salt solution, for example, any one or more of cobalt sulfate, cobalt nitrate, cobalt chloride, and cobalt acetate can be used.

As a manganese salt that is a solute of the manganese salt solution, for example, any one or more of manganese sulfate, manganese nitrate, and manganese chloride can be used.

The above-described metal salts are used in ratios corresponding to a composition ratio represented by the formula (I).

That is, the metal salts are used in amounts that cause the mole ratio of nickel, which is the solute of the nickel salt solution, cobalt, which is the solute of the cobalt salt solution, and manganese, which is the solute of the manganese salt solution to satisfy the relationship between a and b in the formula (I).

In addition, the solvents of the nickel salt solution, the cobalt salt solution, and the manganese salt solution are water.

The complexing agent is an agent capable of form a complex with a nickel ion, a cobalt ion, and a manganese ion in an aqueous solution. As the complexing agent, ammonium ion donors (ammonium sulfate, ammonium chloride, ammonium carbonate, ammonium fluoride, and the like), hydrazine, ethylenediaminetetraacetic acid, nitrilotriacetic acid, uracildiacetic acid, and glycine are exemplary examples.

In the steps for producing the precursor, the complexing agent may or may not be used. In a case where the complexing agent is used, regarding the amount of the complexing agent that is contained in the liquid mixture containing the nickel salt solution, a metal salt solution of the optional metal, and the complexing agent, for example, the mole ratio of the complexing agent to the sum of the mole numbers of the metal salts is more than 0 and 2.0 or less. In the present embodiment, regarding the amount of the complexing agent that is contained in the liquid mixture containing the nickel salt solution, the cobalt salt solution, the manganese salt solution, and the complexing agent, for example, the mole ratio of the complexing agent to the sum of the mole numbers of the metal salts is more than 0 and 2.0 or less.

In the co-precipitation method, in order to adjust the pH value of the liquid mixture containing the nickel salt solution, the cobalt salt solution, the manganese salt solution, and the complexing agent, an alkali metal hydroxide is added to the liquid mixture before the pH of the liquid mixture turns from alkaline into neutral. The alkali metal hydroxide is, for example, a sodium hydroxide aqueous solution or a potassium hydroxide aqueous solution.

The value of pH in the present specification is defined as a value measured when the temperature of the liquid mixture is 40°C. The pH of the liquid mixture is measured when the temperature of the liquid mixture sampled from the reaction vessel reaches 40°C.

When not only the nickel salt solution, the cobalt salt solution, and the manganese salt solution but also the complexing agent are continuously supplied to the reaction vessel, nickel, cobalt, and manganese react together, thereby generating a reaction precipitate represented by $Ni_{(1-a-b-c)}Co_aMn_bM1_c(OH)_{2+d}$.

At the time of the reaction, the temperature of the reaction vessel is controlled within a range of, for example, 20°C or higher and 80°C or lower and preferably 30°C or higher and 70°C or lower.

At the time of the reaction, the pH value in the reaction vessel is controlled within a range of, for example, pH 9 or higher and pH 13 or lower and preferably pH 11 or higher and pH 13 or lower when the temperature of the aqueous solution is 40°C.

Substances in the reaction vessel are appropriately stirred and mixed together.

As the reaction vessel, it is possible to use a reaction vessel in which the formed reaction precipitate is caused to overflow for separation.

In the present embodiment, it is possible to control the precursor of the present embodiment within the ranges of the requirements (1) and (2) by adjusting the pH value of the liquid mixture containing the nickel salt solution, the cobalt salt solution, the manganese salt solution, and the complexing agent.

When the metal salt concentrations, stirring speeds, reaction temperature, and reaction pHs of the metal salt solutions that are supplied to the reaction vessel, calcining conditions described below, and the like are appropriately controlled, it is possible to control a variety of physical properties of a lithium metal composite oxide that is finally obtained.

In addition to the control of the above-described conditions, the oxidation state of a reaction product may be controlled by supplying a variety of gases, for example, an inert gas such as nitrogen, argon, or carbon dioxide, an oxidizing gas such as an air or oxygen, or a gas mixture thereof to the reaction vessel.

As a compound that oxidizes the reaction product to be obtained (oxidizing agent), it is possible to use a peroxide such as hydrogen peroxide, a peroxide salt such as permanganate, perchloric acid, hypochlorous acid, nitric acid, halogen, ozone, or the like.

As a compound that reduces the reaction product to be obtained, it is possible to use an organic acid such as oxalic acid or formic acid, sulfite, hydrazine, or the like.

The inside of the reaction vessel may be an inert atmosphere. An inert atmosphere inside the reaction vessel suppresses, among the metals that are contained in the liquid mixture, a metal that is more easily oxidized than nickel being aggregated earlier than nickel. Therefore, it is possible to obtain a uniform hydroxide raw material powder.

In order to form an inert atmosphere in the reaction vessel, a method in which an inert gas is aerated into the reaction vessel or a method in which an inert gas is bubbled in the liquid mixture is an exemplary example.

As the inert gas that can be used in the present embodiment, nitrogen gas or argon gas is an exemplary example, and nitrogen gas is preferable.

In addition, the inside of the reaction vessel may be an appropriate oxidizing containing atmosphere. The oxidizing atmosphere may be an oxygen-containing atmosphere formed by mixing an oxidizing gas into an inert gas or an oxidizing agent may be present in an inert gas atmosphere. When the inside of the reaction vessel is an appropriate oxidizing atmosphere, a transition metal that is contained in the liquid mixture is appropriately oxidized, which makes it easy to control the form of the metal composite oxide.

As oxygen or the oxidizing agent in the oxidizing atmosphere, a sufficient number of oxygen atoms need to be present in order to oxidize the transition metal.

In a case where the oxidizing atmosphere is an oxygen-containing atmosphere, the atmosphere in the reaction vessel can be controlled by a method such as the aeration of an oxidizing gas into the reaction vessel or the bubbling of an oxidizing gas in the liquid mixture.

After the above-described reaction, the obtained reaction precipitate is washed and then dried, whereby a nickel-containing composite hydroxide is obtained as a nickel-containing composite metal compound.

At the time of isolating the precursor from the reaction precipitate, a method in which a slurry containing the reaction precipitate (co-precipitate slurry) is dehydrated by centrifugation, suction filtration, or the like is preferably used.

In the above-described example, the nickel-containing composite metal hydroxide is produced, but a nickel-containing composite metal oxide may also be prepared. When a nickel-containing composite metal oxide is adjusted from the nickel-containing composite metal hydroxide, an oxide production step of producing an oxide by calcining the nickel-containing composite metal hydroxide at a temperature of 300°C or higher and 800°C or lower for one hour or longer and 10 hours or shorter may be carried out.

• Washing step

In a case where washing the reaction precipitate only with water leaves an impurity derived from the liquid mixture, a co-precipitate obtained by the dehydration is preferably washed with a washing liquid containing water or an alkali. In the present embodiment, the co-precipitate is preferably washed with a washing liquid containing an alkali and more preferably washed with a sodium hydroxide solution.

• Pulverization step

In the present embodiment, it is preferable to pulverize the produced hydroxide raw material powder. Pulverization of the hydroxide raw material powder makes it possible to produce a precursor that satisfies the requirements (1) and (2). Pulverization of the hydroxide raw material powder breaks the aggregation of the hydroxide raw material powder and generates a new surface, whereby it is possible for the hydroxide raw material powder to react more uniformly with a lithium raw material.

As a pulverization device that is used in the pulverization step, it is possible to use an airflow-type pulverizer, a collision-type pulverizer equipped with a classification mechanism, a pin mill, a ball mill, a jet mill, a counter jet mill, or the like.

In the method for producing a precursor of the present embodiment, the pulverization step is preferably carried out using a jet mill or a counter jet mill, which is an airflow-type pulverizer.

When the pulverization step using a jet mill is taken as an example, the lower limit value of the pulverization pressure is preferably 0.2 MPa, more preferably 0.25 MPa, and particularly preferably 0.3 MPa. The upper limit value of the pulverization pressure is preferably 0.7 MPa, more preferably 0.65 MPa, and particularly preferably 0.6 MPa.

The above-described upper limit value and lower limit value can be randomly combined together.

As the combination, pulverization pressures of 0.2 MPa or more and 0.7 MPa or less, 0.25 MPa or more and 0.65 MPa or less, and 0.3 MPa or more and 0.6 MPa or less are exemplary examples.

When the pulverization pressure is the above-described upper limit value or less, it is possible to produce a precursor that satisfies the requirements (1) and (2) while suppressing the breakage of the crystal structure. When the pulverization pressure is the above-described lower limit value or more, it is possible to prevent the remaining of unpulverized coarse particles and to produce a precursor that satisfies the requirements (1) and (2).

In the case of using a counter jet mill as the pulverization device, it is possible to produce a precursor that satisfies the requirements (1) and (2) by adjusting the classification rotation speed within a range of 15000 rpm or faster and 20000 rpm or slower.

The supply speed of the unpulverized hydroxide raw material powder that is supplied to the pulverization device can be appropriately adjusted depending on the operation status of the pulverization device, and supply speeds of 1 kg/hr or faster, 2 kg/hr or faster, and 3 kg/hr or faster are exemplary examples. In addition, supply speeds of 10 kg/hr or slower, 9 kg/hr or slower, and 8 kg/hr or slower are exemplary examples.

The above-described upper limit value and lower limit value can be randomly combined together.

In addition, in the case of using a pulverizer equipped with a classification mechanism, it is possible to use methods such as wind power classification, wet-type classification, and specific gravity classification. For example, a wind power classifier such as a swirl flow classification is preferably used. In this case, the particle diameters of the particles of the precursor can be controlled by controlling the air volume and the wind speed. As a wind speed when the unpulverized hydroxide raw material powder passes through the classifier, 1.0 $m^3$/min or faster and 2.0 $m^3$/min or slower is an exemplary example.

Before and after the pulverization step, powder X-ray diffraction measurement is carried out using a CuK$\alpha$ ray on the hydroxide raw material powder, and the ratio ($\alpha/\beta$) of the integrated intensity $\alpha$ of the peak present within the range of a diffraction angle $2\theta = 19.2 \pm 1°$ to the integrated intensity $\beta$ of the peak present within the range of a diffraction angle $2\theta = 33.5 \pm 1°$ is obtained in each measurement.

In the present embodiment, the ratio ($\alpha/\beta$) before the pulverization step at this time is represented by A, and the ratio ($\alpha/\beta$) after the pulverization step is represented by B. In the present embodiment, the ratio (B/A) between A and B is preferably 1 or more and 2 or less, more preferably 1.0 or more and 2.0 or less, particularly preferably 1.2 or more and 1.8 or less, and still more preferably 1.4 or more and 1.7 or less.

The fact that the ratio (B/A) is the above-described lower limit value or more means that the hydroxide raw material powder is sufficient pulverized, the remaining of unpulverized coarse particles is prevented, and a precursor that satisfies the requirements (1) and (2) can be produced.

The fact that the ratio (B/A) is the above-described upper limit value or less means that it is possible to produce a precursor that satisfies the requirements (1) and (2) while suppressing the breakage of the crystal structure.

In the method for producing a precursor of the present embodiment, the hydroxide raw material powder satisfies the following requirements (A) to (C).

Requirement (A): The following formula (I) that represents the mole ratios of metal elements is satisfied and, in the following formula (I), $0 \leq a \leq 0.4$, $0 \leq b \leq 0.4$, and $0 \leq c \leq 0.1$ are satisfied

Requirement (B): A 50% cumulative volume particle size ($D_{50}$) obtained from particle size distribution measurement is 2 $\mu$m or more and 20 $\mu$m or less

Requirement (C): The ratio ($D_{90}/D_{10}$) of a 90% cumulative volume particle size ($D_{90}$) obtained from particle size distribution measurement to a 10% cumulative volume particle size ($D_{10}$) obtained from the particle size distribution measurement is 3 or less

Ni : Co : Mn : $M^1$ = (1 - a - b - c) : a : b : c ... (I) (Here, $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

• Requirement (A)

The hydroxide raw material powder of the present embodiment satisfies the formula (I). The description of the formula (I) in the requirement (A) is the same as the description of the formula (I) above.

The composition of the hydroxide raw material powder is carried out using an inductively coupled plasma emission spectrometer after dissolving the hydroxide raw material powder in hydrochloric acid.

As the inductively coupled plasma emission spectrometer, it is possible to use, for example, SPS3000 manufactured by SII NanoTechnology Inc.

• Requirement (B)

In the hydroxide raw material powder of the present embodiment, the 50% cumulative volume particle size ($D_{50}$) obtained from particle size distribution measurement is 2 $\mu$m or more and 20 $\mu$m or less. ($D_{50}$) of the hydroxide raw material powder is preferably 3 $\mu$m or more and 18 $\mu$m or less.

($D_{50}$) of the hydroxide raw material powder is measured under the same conditions as the above-described ($D_{50}$) of the precursor.

• Requirement (C)

In the hydroxide raw material powder of the present embodiment, the ratio ($D_{90}/D_{10}$) of a 90% cumulative volume particle size ($D_{90}$) obtained from particle size distribution measurement to a 10% cumulative volume particle size ($D_{10}$) obtained from the particle size distribution measurement is 3 or less. The ratio ($D_{90}/D_{10}$) is preferably 2.9 or less and more preferably 2.8 or less. The ratio ($D_{90}/D_{10}$) is preferably 1.5 or more and more preferably 2.0 or more.

The ratio ($D_{90}/D_{10}$) of the hydroxide raw material powder is calculated using ($D_{90}$) and ($D_{10}$) that are obtained by measuring the cumulative volume particle sizes under the same conditions as the above-described ($D_{90}$) and ($D_{10}$) of the precursor.

The above-described physical property values are also applicable to raw material powders other than the hydroxide raw material powder. That is, in the method for producing a precursor of the present embodiment, the raw material powder satisfies the requirements (A) to (C).

<Method for producing positive electrode active material for a lithium secondary battery >

The present embodiment is a method for producing a positive electrode active material for a lithium secondary battery. Hereinafter, the method for producing a positive electrode active material for a lithium secondary battery will be abbreviated as "the method for producing a positive electrode active material" in some cases.

The method for producing a positive electrode active material of the present embodiment includes a step of mixing the positive electrode active material precursor for a lithium secondary battery of the present embodiment and a lithium compound to obtain a mixture and a step of calcining the mixture.

[Mixing step]

The present step is a step of mixing a lithium compound and the precursor to obtain a mixture.

• Lithium compound

As the lithium compound that is used in the present invention, it is possible to use any one kind of lithium carbonate, lithium nitrate, lithium acetate, lithium hydroxide, lithium oxide, lithium chloride, and lithium fluoride or a mixture of two or more kinds thereof. Among these, any one or both of lithium hydroxide and lithium carbonate is preferable.

In addition, in a case where lithium hydroxide contains lithium carbonate as an impurity, the content of lithium carbonate in lithium hydroxide is preferably 5 mass% or less.

The method for mixing the precursor and the lithium compound will be described.

The precursor is dried and then mixed with the lithium compound. The drying conditions are not particularly limited, and any of the following drying conditions 1) to 3) are exemplary examples.

1) A condition under which the precursor is not oxidized or reduced. Specifically, this is a condition for drying oxides alone or hydroxides alone.

2) A conditions under which the precursor is oxidized. Specifically, this is a drying condition for oxidizing a hydroxide to an oxide.

3) A condition under which the precursor is reduced. Specifically, this is a drying condition for reducing an oxide to a hydroxide.

In order for the condition under which the precursor is not oxidized or reduced, an inert gas such as nitrogen, helium, or argon may be used in the atmosphere during the drying.

In order for the condition under which a hydroxide is oxidized, oxygen or an air may be used in the atmosphere during the drying.

In addition, in order for the condition under which the precursor is reduced, a reducing agent such as hydrazine or sodium sulfite may be used in an inert gas atmosphere during the drying.

After the drying of the precursor, classification may be appropriately carried out.

The above-described lithium compound and the precursor are mixed in consideration of the composition ratio of a final target product. For example, in a case where a nickel cobalt manganese metal composite hydroxide is used, the precursor is mixed with the lithium compound such that the ratio of the number of lithium atoms to the number of metal atoms that are contained in the nickel cobalt manganese metal composite hydroxide becomes more than 1.0. The ratio of the number of lithium atoms to the number of metal atoms is preferably 1.05 or more and more preferably 1.10 or more. The mixture of the nickel-containing composite metal hydroxide and the lithium compound is calcined in the subsequent calcining step, whereby a lithium composite metal oxide is obtained.

[Step of calcining mixture to obtain lithium composite metal oxide powder]

The present step is a step of calcining the mixture of the lithium compound and the precursor to obtain a lithium composite metal oxide powder.

In the calcining, a dry air, an oxygen atmosphere, an inert atmosphere, or the like is used depending on a desired composition, and a plurality of heating steps is carried out as necessary.

The calcining temperature of the precursor and the lithium compound is not particularly limited and is, for example, preferably 600°C or higher and 1100°C or lower and more preferably 650°C or higher and 1050°C or lower.

When the calcining temperature is the above-described lower limit value or more, it is possible to obtain a lithium metal composite oxide having a strong crystal structure. In addition, when the calcining temperature is the above-described upper limit value or lower, it is possible to reduce the volatilization of lithium on the surfaces of secondary particles that are contained in the lithium metal composite oxide. In the calcining step, the temperature rising rate in the heating step until the highest holding temperature is reached is preferably 180 °C/hour or faster, more preferably 200 °C/hour or faster, and particularly preferably 250 °C/hour or faster.

The highest holding temperature in the present specification is the highest temperature of the holding temperature of the atmosphere in a calcining furnace in a calcining step and means the calcining temperature in the calcining step.

In the case of a main calcining step having a plurality of heating steps, the highest holding temperature means the highest temperature in each heating step.

The temperature rising rate in the present specification is calculated from the time taken while the temperature begins to be raised and reaches the highest holding temperature in a calcining device and a temperature difference between the temperature in the calcining furnace of the calcining device at the time of beginning to raise the temperature and the highest holding temperature.

Regarding the calcining time, the total time taken while the temperature begins to be raised and reaches the calcining temperature and the holding of the mixture at the calcining temperature ends is preferably set to three hours or longer and 50 hours or shorter. When the calcining time exceeds 50 hours, there is a tendency that the battery performance substantially deteriorates due to the volatilization of lithium. When the calcining time is shorter than three hours, the development of crystals is poor, and there is a tendency that the battery performance becomes poor. It is also effective to carry out preliminary calcining before the above-described calcining. The temperature of the preliminary calcining is within a range of 300°C or higher and 850°C or lower, and the preliminary calcining is preferably carried out for one to 10 hours.

In the present embodiment, the mixture of the lithium compound and the precursor may be calcined in the presence of an inert melting agent. Calcining of a mixture containing the precursor, the lithium compound, and an inert melting agent makes it possible to fire the mixture of the precursor and the lithium compound in the presence of the inert melting agent. Calcining of the mixture of the precursor and the lithium compound in the presence of an inert melting agent makes it possible to accelerate the growth reaction of particles.

Calcining of the mixture in the presence of an inert melting agent makes it possible to accelerate the reaction of the mixture. The inert melting agent may remain in the calcined lithium composite metal oxide powder or may be removed by being washed with a washing liquid after the calcining. In the present embodiment, the calcined lithium composite metal oxide powder is preferably washed using pure water, an alkaline washing liquid, or the like.

In the present embodiment, even in the case of adding the inert melting agent in the mixing step, the calcining temperature and the total time may be appropriately adjusted within the above-described ranges.

The inert melting agent that can be used in the present embodiment is not particularly limited as long as the inert melting agent does not easily react with the mixture during the calcining. In the present embodiment, one or more selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate are exemplary examples.

As the fluoride of A, NaF (melting point: 993°C), KF (melting point: 858°C), RbF (melting point: 795°C), CsF (melting point: 682°C), $CaF_2$ (melting point: 1402°C), $MgF_2$ (melting point: 1263°C), $SrF_2$ (melting point: 1473°C), and $BaF_2$ (melting point: 1355°C) can be exemplary examples.

As the chloride of A, NaCl (melting point: 801°C), KCl (melting point: 770°C), RbCl (melting point: 718°C), CsCl (melting point: 645°C), $CaCl_2$ (melting point: 782°C), $MgCl_2$ (melting point: 714°C), $SrCl_2$ (melting point: 857°C), and $BaCl_2$ (melting point: 963°C) can be exemplary examples.

As the carbonate of A, $Na_2CO_3$ (melting point: 854°C), $K_2CO_3$ (melting point: 899°C), $Rb_2CO_3$ (melting point: 837°C), $CS_2CO_3$ (melting point: 793°C), $CaCO_3$ (melting point: 825°C), $MgCO_3$ (melting point: 990°C), $SrCO_3$ (melting point: 1497°C), and $BaCO_3$ (melting point: 1380°C) can be exemplary examples.

As the sulfate of A, $Na_2SO_4$ (melting point: 884°C), $K_2SO_4$ (melting point: 1069°C), $Rb_2SO_4$ (melting point: 1066°C), $Cs_2SO_4$ (melting point: 1005°C), $CaSO_4$ (melting point: 1460°C), $MgSO_4$ (melting point: 1137°C), $SrSO_4$ (melting point: 1605°C), and $BaSO_4$ (melting point: 1580°C) can b exemplary examples.

Examples of the nitrate of A, $NaNO_3$ (melting point: 310°C), $KNO_3$ (melting point: 337°C), $RbNO_3$ (melting point: 316°C), CsNO3 (melting point: 417°C), $Ca(NO_3)_2$ (melting point: 561°C), $Mg(NO_3)_2$, $Sr(NO_3)_2$ (melting point: 645°C), and $Ba(NO_3)_2$ (melting point: 596°C) can be exemplary examples.

As the phosphate of A, $Na_3PO_4$, $K_3PO_4$ (melting point: 1340°C), $Rb_3PO_4$, $Cs_3PO_4$, $Ca_3(PO_4)_2$, $Mg_3(PO_4)_2$, (melting point: 1184°C), $Sr_3(PO_4)_2$ (melting point: 1727°C), and $Ba_3(PO_4)_2$ (melting point: 1767°C) can be exemplary examples.

As the hydroxide of A, NaOH (melting point: 318°C), KOH (melting point: 360°C), RbOH (melting point: 301°C), CsOH (melting point: 272°C), $Ca(OH)_2$ (melting point: 408°C), $Mg(OH)_2$ (melting point: 350°C), $Sr(OH)_2$ (melting point: 375°C), and $Ba(OH)_2$ (melting point: 853°C) can be exemplary examples.

As the molybdate of A, $Na_2MoO_4$ (melting point: 698°C), $K_2MoO_4$ (melting point: 919°C), $Rb_2MoO_4$ (melting point: 958°C), $Cs_2MoO_4$ (melting point: 956°C), $CaMoO_4$ (melting point: 1520°C), $MgMoO_4$ (melting point: 1060°C), $SrMoO_4$ (melting point: 1040°C), and $BaMoO_4$ (melting point: 1460°C) can be exemplary examples.

As the tungstate of A, $Na_2WO_4$ (melting point: 687°C), $K_2WO_4$, $Rb_2WO_4$, $Cs_2WO_4$, $CaWO_4$, $MgWO_4$, $SrWO_4$, and $BaWO_4$ can be examplary examples.

In the present embodiment, it is also possible to use two or more kinds of inert melting agents described above. In the case of using two or more kinds of inert melting agents, there is also a case where the melting point of all of the inert melting agents decreases. In addition, among these inert melting agents, as an inert melting agent for obtaining a highly crystalline lithium composite metal oxide powder, any of the carbonate of A, the sulfate of A, and the chloride of A or a combination thereof is preferable. In addition, A is preferably any one or both of sodium (Na) and potassium (K). That is, among the above-described inert melting agents, a particularly preferable inert melting agent is one or more selected from the group consisting of NaOH, KOH, NaCl, KCl, $Na_2CO_3$, $K_2CO_3$, $Na_2SO_4$, and $K_2SO_4$.

In the present embodiment, potassium sulfate or sodium sulfate is preferable as the inert melting agent.

Pure water or an alkaline washing liquid can be used to wash the inert melting agent remaining in the calcined lithium composite metal oxide powder.

As the alkaline washing liquid, aqueous solutions of one or more anhydrides selected from the group consisting of lithium hydroxide (LiOH), sodium hydroxide (NaOH), potassium hydroxide (KOH), lithium carbonate ($Li_2CO_3$), sodium carbonate ($Na_2CO_3$), potassium carbonate ($K_2CO_3$), and ammonium carbonate (($NH_4)_2CO_3$) and a hydrate thereof are exemplary examples. In addition, as an alkali, it is also possible to use ammonia.

The temperature of the washing liquid that is used for the washing is preferably 15°C or lower, more preferably 10°C or lower, and still more preferably 8°C or lower. When the temperature of the washing liquid is controlled within the above-described range to an extent that the washing liquid does not freeze, it is possible to suppress the excessive elution of lithium ions from the crystal structure of the lithium composite metal oxide powder into the washing liquid during the washing.

In the washing step, as a method for bringing the washing liquid and the lithium composite metal oxide powder into contact with each other, a method in which the lithium composite metal oxide powder is injected into an aqueous solution of each washing liquid and stirred, a method in which an aqueous solution of each washing liquid is applied as a shower water to the lithium composite metal oxide, and a method in which the lithium composite metal oxide powder is injected and stirred in an aqueous solution of each washing liquid, then, the lithium composite metal oxide powder is separated from the aqueous solution of each washing liquid, and then the aqueous solution of each washing liquid is applied as a shower water to the separated lithium composite metal oxide powder are exemplary examples.

A lithium composite metal oxide obtained by the calcining is pulverized, then, appropriately classified, and thereby made into a positive electrode active material for a lithium secondary battery that is applicable to lithium secondary batteries (hereinafter, also referred to as "positive electrode active material" in some cases).

«Composition formula (II)>>

In the method for producing a positive electrode active material of the present embodiment, a positive electrode active material to be produced is preferably represented by the following composition formula (II).

$$Li[Li_x(Ni_{(1-y-z-w)}Co_yMn_zM_w)_{1-x}]O_2 ... \qquad (II)$$

(Here, $-0.1 \leq x \leq 0.2$, $0 \leq y \leq 0.4$, $0 \leq z \leq 0.4$, $0 \leq w \leq 0.1$, and $y + z + w < 1$ are satisfied, and M represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

From the viewpoint of obtaining a lithium secondary battery having high cycle characteristics, x in the composition formula (II) is preferably more than 0, more preferably 0.01 or more, and still more preferably 0.02 or more. In addition, from the viewpoint of obtaining a lithium secondary battery having a higher initial coulombic efficiency, x in the composition formula (II) is preferably 0.1 or less, more preferably 0.08 or less, and still more preferably 0.06 or less.

The upper limit value and the lower limit value of x can be randomly combined together.

In the present embodiment, $0 < x \leq 0.2$ is preferable, $0 < x \leq 0.1$ is more preferable, $0.01 \leq x \leq 0.08$ is still more preferable, and $0.02 \leq x \leq 0.06$ is particularly preferable.

From the viewpoint of obtaining a lithium secondary battery having a high discharge capacity, in the composition formula (II), $0 < y + z + w < 1$ is preferable, $0 < y + z + w \leq 0.5$ is more preferable, $0 < y + z + w \leq 0.25$ is still more preferable, and $0 < y + z + w \leq 0.2$ is particularly preferable.

In addition, from the viewpoint of obtaining a lithium secondary battery having a low battery internal resistance, y in the composition formula (II) is preferably more than 0, more preferably 0.01 or more, still more preferably 0.05 or more, and particularly preferably 0.06 or more. In addition, from the viewpoint of obtaining a lithium secondary battery having high thermal stability, y in the composition formula (II) is more preferably 0.35 or less and still more preferably 0.3 or less.

The upper limit value and the lower limit value of y can be randomly combined together.

In the present embodiment, $0 < y \leq 0.4$ is preferable, $0.01 \leq y \leq 0.35$ is more preferable, $0.05 \leq y \leq 0.3$ is still more preferable, and $0.06 \leq y \leq 0.3$ is particularly preferable.

In addition, from the viewpoint of obtaining a lithium secondary battery having high cycle characteristics, z in the composition formula (II) is preferably 0.01 or more, more preferably 0.02 or more, and still more preferably 0.04 or more. In addition, from the viewpoint of obtaining a lithium secondary battery having high preservability at high temperatures (for example, in an environment at 60°C), z in the composition formula (II) is preferably 0.4 or less, more preferably 0.35 or less, and still more preferably 0.3 or less.

The upper limit value and the lower limit value of z can be randomly combined together.

In the present embodiment, $0.01 \leq z \leq 0.4$ is preferable, $0.02 \leq z \leq 0.35$ is more preferable, and $0.04 \leq z \leq 0.3$ is still more preferableble.

In addition, from the viewpoint of obtaining a lithium secondary battery having a low battery internal resistance, w in the composition formula (II) is preferably more than 0, more preferably 0.0005 or more, and still more preferably 0.001 or more. In addition, from the viewpoint of obtaining a lithium secondary battery having a large discharge capacity at a high current rate, w in the composition formula (II) is preferably 0.09 or less, more preferably 0.08 or less, and still more preferably 0.07 or less.

The upper limit value and the lower limit value of w can be randomly combined together.

In the present embodiment, $0 < w \leq 0.09$ is preferable, $0.0005 \leq w \leq 0.08$ is more preferable, and $0.001 \leq w \leq$

0.07 is still more preferable.

In addition, M in the composition formula (II) is preferably one or more elements selected from the group consisting of Mg, Ca, Zr, Al, Ti, Zn, Sr, W, and B from the viewpoint of obtaining a lithium secondary battery having high cycle characteristics and preferably one or more elements selected from the group consisting of Al, W, B, and Zr from the viewpoint of obtaining a lithium secondary battery having high thermal stability.

The composition analysis of a positive electrode active material that is produced by the present embodiment can be carried out with an inductively coupled plasma emission spectrometer.

As the inductively coupled plasma emission spectrometer, it is possible to use, for example, SPS3000 manufactured by SII NanoTechnology Inc.

(Layered structure)

In the present embodiment, the crystal structure of the positive electrode active material is a layered structure and more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, the crystal structure is particularly preferably a hexagonal crystal structure belonging to the space group R-3m or a monoclinic crystal structure belonging to C2/m in order to obtain a lithium secondary battery having a high discharge capacity.

<Lithium secondary battery>

Next, a positive electrode for which a positive electrode active material for a lithium secondary battery that is produced by the present embodiment is used as a positive electrode active material for lithium secondary batteries and a lithium secondary battery having this positive electrode will be described while describing the configuration of the lithium secondary battery.

An example of the lithium secondary battery of the present embodiment has a positive electrode, a negative electrode, a separator that is sandwiched between the positive electrode and the negative electrode, and an electrolytic solution that is disposed between the positive electrode and the negative electrode.

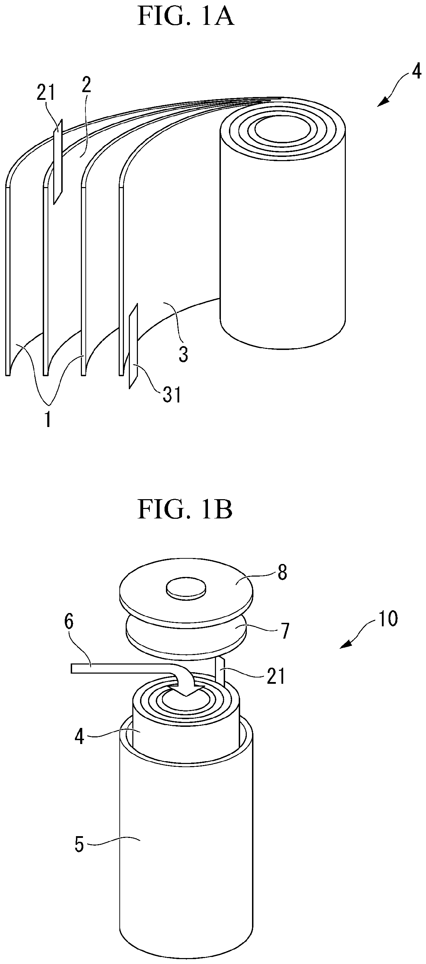

Fig. 1A and Fig. 1B are schematic views illustrating an example of the lithium secondary battery of the present embodiment. A cylindrical lithium secondary battery 10 of the present embodiment is produced as described below.

First, as shown in Fig. 1A, a pair of separators 1 having a strip shape, a strip-shaped positive electrode 2 having a positive electrode lead 21 at one end, and a strip-shaped negative electrode 3 having a negative electrode lead 31 at one end are laminated in the order of the separator 1, the positive electrode 2, the separator 1, and the negative electrode 3 and are wound to form an electrode group 4.

Next, as shown in Fig. 1B, the electrode group 4 and an insulator (not shown) are accommodated in a battery can 5, then, the can bottom is sealed, the electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, which makes it possible to produce a lithium secondary battery 10.

As the shape of the electrode group 4, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. Shapes such as a cylindrical shape and a square shape can be exemplary examples.

Furthermore, the lithium secondary battery is not limited to the winding-type configuration and may have a lamination-type configuration in which the laminated structure of the positive electrode, the separator, the negative electrode, and the separator is repeatedly overlaid. As the lamination-type lithium secondary battery, it is possible to exemplify a so-called coin-type battery, a button-type battery, and a paper-type (or sheet-type) battery.

Hereinafter, each configuration will be described in order.

(Positive electrode)

The positive electrode of the present embodiment can be produced by, first, adjusting a positive electrode mixture containing a positive electrode active material, a conductive material, and a binder and supporting the positive electrode mixture by a positive electrode current collector.

(Conductive material)

As the conductive material in the positive electrode of the present embodiment, a carbon material can be used. As the carbon material, graphite powder, carbon black (for example, acetylene black), a fibrous carbon material, and the like can be exemplary examples. Since carbon black is fine particles and has a large surface area, the addition of a small amount of carbon black to the positive electrode mixture enhances the conductive property in the positive electrode and makes it possible to improve the charge and discharge efficiency and the output characteristics. However, when an excess of carbon black is added, both the binding force between the positive electrode mixture and the positive electrode current collector attributed to the binder and the binding force inside the positive electrode mixture deteriorate, which, conversely, acts as a cause for an increase in the internal resistance.

The fraction of the conductive material in the positive electrode mixture is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the fraction.

(Binder)

As the binder in the positive electrode of the present embodiment, a thermoplastic resin can be used.

As the thermoplastic resin, fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the fraction of the fluororesin in the entire positive electrode mixture is set to 1 mass% or more and 10 mass% or less, and the fraction of the polyolefin resin is set to 0.1 mass% or more and 2 mass% or less, it is possible to obtain a positive electrode mixture having both a high adhesive force to the positive electrode current collector and a high bonding force in the positive electrode mixture.

(Positive electrode current collector)

As the positive electrode current collector in the positive electrode of the present embodiment, a strip-shaped member formed of a metal material such as Al, Ni, or stainless steel as a forming member can be used. Particularly, a positive electrode current collector that is formed of Al and has a thin film shape is preferable since the positive electrode current collector is easy to process and inexpensive.

As the method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery of the present embodiment preferably can be doped with a lithium ion and discharge the lithium ion at a lower potential than the positive electrode, and an electrode formed by supporting a negative electrode mixture containing a negative electrode active material by a negative electrode current collector and an electrode formed of a negative electrode active material alone can be exemplary examples.

(Negative electrode active material)

As the negative electrode active material in the negative electrode, materials that are a carbon material, a chalcogen compound (oxide, sulfide, or the like), a nitride, a metal, or an alloy and can be doped with a lithium ion and discharge the lithium ion at a lower potential than the positive electrode are exemplary examples.

As the carbon material that can be used as the negative electrode active material, graphite such as natural graphite and artificial graphite, cokes, carbon black, pyrolytic carbons, carbon fibers, and organic polymer compound-calcined bodies are exemplary examples.

As the oxide that can be used as the negative electrode active material, oxides of silicon represented by a formula $SiO_x$ (here, x is a positive real number) such as $SiO_2$ and SiO; oxides of titanium represented by a formula $TiO_x$ (here, x is a positive real number) such as $TiO_2$ and TiO; oxides of vanadium represented by a formula $VO_x$ (here, x is a positive real number) such as $V_2O_5$ and $VO_2$; oxides of iron represented by a formula $FeO_x$ (here, x is a positive real number) such as $Fe_3O_4$, $Fe_2O_3$, and FeO; oxides of tin represented by a formula $SnO_x$ (here, x is a positive real number) such as $SnO_2$ and SnO; oxides of tungsten represented by a general formula $WO_x$ (here, x is a positive real number) such as $WO_3$ and $WO_2$; and composite metal oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and TiS; sulfides of vanadium represented by a formula $VS_x$ (here, x is a positive real number) such $V_3S_4$, $VS_2$, and VS; sulfides of iron represented by a formula $FeS_x$ (here, x is a positive real number) such as $Fe_3S_4$, $FeS_2$, and FeS; sulfides of molybdenum represented by a formula $MoS_x$ (here, x is a positive real number) such as $Mo_2S_3$ and $MoS_2$; sulfides of tin represented by a formula $SnS_x$ (here, x is a positive real number) such as $SnS_2$ and SnS; sulfides of tungsten represented by a formula $WS_x$ (here, x is a positive real number) such as $WS_2$; sulfides of antimony represented by a formula $SbS_x$ (here, x is a positive real number) such as $Sb_2S_3$; and sulfides of selenium represented by a formula $SeS_x$ (here, x is a positive real number) such as $Se_5S_3$, $SeS_2$, and SeS can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more kinds thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be exemplary examples.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, a thermoplastic resin can be an exemplary example, and specifically, PVdF, thermoplastic polyimide, carboxymethylcellulose, polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu and has a thin film shape is preferable since the negative electrode current collector does not easily produce an alloy with lithium and is easy to process.

As the method for supporting the negative electrode mixture by the negative electrode current collector, similarly to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery of the present embodiment, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials.

In the present embodiment, the air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably permeate the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolytic solution)

The electrolytic solution in the lithium secondary battery of the present embodiment contains an electrolyte and an organic solvent.

As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more of these electrolytes may be used. Among these, an electrolyte containing at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$ that contain fluorine is preferably used as the electrolyte.

In addition, as the organic solvent that is contained in the electrolytic solution, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or these organic solvents into which a fluoro group is further introduced (the organic solvents in which one or more hydrogen atoms in the organic solvent are substituted with a fluorine atom).

As the organic solvent, two or more of the above-described organic solvents are preferably used in a mixture form. Among these, a solvent mixture containing a carbonate is preferable, and a solvent mixture of a cyclic carbonate and a non-cyclic carbonate and a solvent mixture of a cyclic carbonate and an ether are still more preferable. As the solvent mixture of a cyclic carbonate and a non-cyclic carbonate, a solvent mixture containing ethylene carbonate, dimethyl carbonate, and ethyl methyl carbonate is preferable. The electrolytic solution for which such a solvent mixture is used has a number of features as follows: the electrolytic solution has a broad operating temperature range, does not easily deteriorate even when the lithium secondary battery is charged and discharged at a high current rate, does not easily deteriorate even after used for a long period of time, and does not easily dissolve even in a case where a graphite material such as natural graphite or artificial graphite is used as an active material for the negative electrode.

In addition, as the electrolytic solution, it is preferable to use an electrolytic solution containing a lithium salt containing fluorine such as $LiPF_6$ and an organic solvent having a fluorine substituent since the safety of lithium secondary batteries to be obtained is enhanced. A solvent mixture containing an ether having a fluorine substituent such as pentafluoropropyl methyl ether or 2,2,3,3-tetrafluoropropyl difluoromethyl ether and dimethyl carbonate is still more preferable since the capacity retention rate is high even when the lithium secondary battery is charged and discharged at a high current rate.

A solid electrolyte may be used instead of the electrolytic solution. As the solid electrolyte, it is possible to use, for example, an organic polymer electrolyte such as a polyethylene oxide-based polymer compound or a polymer compound containing at least one or more of a polyorganosiloxane chain or a polyoxyalkylene chain. In addition, it is also possible to use a so-called gel-type solid electrolyte in which a non-aqueous electrolytic solution is held in a polymer compound. In addition, inorganic solid electrolytes containing a sulfide such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ are exemplary examples, and a mixture or two or more thereof may be used. There is a case where the use of these solid electrolytes further enhances the safety of the lithium secondary battery.

In addition, in a case where the solid electrolyte is used in the lithium secondary battery of the present embodiment, there is also a case where the solid electrolyte plays a role of the separator, and in such a case, the separator is not required in some cases.

Since the lithium composite metal compound that is produced by the above-described present embodiment is used in the positive electrode active material having the above-described configuration, it is possible to improve the initial charge and discharge efficiency and the discharge rate characteristics of the lithium secondary battery for which the positive electrode active material is used.

In addition, since the positive electrode having the above-described configuration has a positive electrode active material for a lithium secondary battery having the above-described configuration, it is possible to improve the initial charge and discharge efficiency and the discharge rate characteristics of the lithium secondary battery.

Furthermore, the lithium secondary battery having the above-described configuration has the above-described positive electrode and thus becomes a secondary battery having a high initial charge and discharge efficiency and high discharge rate characteristics.

Another aspect of the present invention includes the following inventions <1> to <4>.

<1> A positive electrode active material precursor for a lithium secondary battery, in which the following requirements (1) and the following (2) are satisfied, the following requirement (3) is further satisfied, and the precursor is represented by the following formula.

Requirement (1): In powder X-ray diffraction measurement using a CuKα ray, α/β that is a ratio of an integrated intensity α of a peak present within a range of a diffraction angle 2θ = 19.2 ± 1° to an integrated intensity β of a peak present within a range of a diffraction angle 2θ = 33.5 ± 1° is 3.0 or more and 5.8 or less.

Requirement (2): A 10% cumulative volume particle size $D_{10}$ obtained from particle size distribution measurement is 0.1 μm or more and 2 μm or less.

Requirement (3): In powder X-ray diffraction measurement using a CuKα ray, β/γ that is a ratio of the integrated intensity β of the peak present within the range of a diffraction angle 2θ = 33.5 ± 1° to an integrated intensity γ of a peak within a range of a diffraction angle 2θ = 38.5 ± 1° is 0.370 or more and 0.500 or less.

$$Ni_{(1-a-b-c)}Co_aMn_bM^1{}_c(OH)_{2+d} \qquad \text{(Formula)}$$

(Here, 0≤a≤0.4, 0≤b≤0.4, and 0≤c≤0.1 are satisfied, d is -0.2 or more and 0.4 or less, and $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

<2> The positive electrode active material precursor for a lithium secondary battery according to <1>, in which the following requirement (4) is further satisfied.

Requirement (4): A 50% cumulative volume particle size $D_{50}$ obtained from the particle size distribution measurement is 0.1 μm or more and 5 μm or less.

<3> The positive electrode active material precursor for a lithium secondary battery according to <1> or <2>, in which the following requirement (5) is further satisfied.

Requirement (5): A 90% cumulative volume particle size ($D_{90}$) obtained from particle size distribution measurement is 0.1 μm or more and 10 μm or less.

<4> A method for producing a positive electrode active material precursor for a lithium secondary battery, the method including a pulverization step of pulverizing a raw material powder that satisfies the following requirements (B) and (C), in which the precursor satisfies the following requirement (1) and is represented by the following formula.

Requirement (B): A 50% cumulative volume particle size $D_{50}$ obtained from the particle size distribution measurement is 2 μm or more and 20 μm or less.

Requirement (C): $D_{90}/D_{10}$ that is a ratio of a 90% cumulative volume particle size $D_{90}$ obtained from particle size distribution measurement to a 10% cumulative volume particle size $D_{10}$ obtained from the particle size distribution measurement is 3 or less.

$$Ni : Co : Mn : M^1 = (1 - a - b - c) : a : b : c \ldots \qquad (I)$$

(Here, $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

Requirement (1): In powder X-ray diffraction measurement using a CuK$\alpha$ ray, $\alpha/\beta$ that is a ratio of an integrated intensity $\alpha$ of a peak present within a range of a diffraction angle $2\theta = 19.2 \pm 1°$ to an integrated intensity $\beta$ of a peak present within a range of a diffraction angle $2\theta = 33.5 \pm 1°$ is 3.0 or more and 5.8 or less.

$$Ni_{(1-a-b-c)}Co_aMn_bM^1{}_c(OH)_{2+d} \qquad \text{(Formula)}$$

(Here, $0 \leq a \leq 0.4$, $0 \leq b \leq 0.4$, and $0 \leq c \leq 0.1$ are satisfied, d is -0.2 or more and 0.4 or less, and $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

[Examples]

Next, the present invention will be described in more detail using examples.

<<(1) Measurement of ratio ($\alpha/\beta$)>>

Powder X-ray diffraction measurement was carried out using an X-ray diffractometer (Ultima IV manufactured by Rigaku Corporation). A precursor powder was loaded into a dedicated substrate, and the measurement was carried out using a Cu-K$\alpha$ radiation source under conditions of a diffraction angle of $2\theta = 10°$ to $90°$, a sampling width of 0.02°, and a scan speed of 4 °/min, thereby obtaining a powder X-ray diffraction pattern.

Using an integrated X-ray powder diffraction software JADE, the ratio ($\alpha/\beta$) of the integrated intensity $\alpha$ of a peak present within a range of a diffraction angle $2\theta = 19.2 \pm 1°$ to the integrated intensity $\beta$ of a peak present within a range of a diffraction angle $2\theta = 33.5 \pm 1°$ is calculated from the powder X-ray diffraction pattern.

<<Measurement of (2) $D_{10}$, (4) $D_{50}$, and (5) $D_{90}$>>

The cumulative volume particle size distribution of a precursor or a hydroxide raw material powder was measured by the laser diffraction scattering method. A 10 mass% sodium hexametaphosphate aqueous solution (250 $\mu$L) was injected as a dispersion medium into MICROTRAC MT3300EXII manufactured by MicrotracBell Corp. and the particle size distribution was measured, thereby obtaining a volume-based cumulative particle size distribution curve. The precursor powder was injected such that the transmittance at the time of measurement reached $85 \pm 5\%$ and measured with the specimen refractive index set to 1.55, the solvent refractive index set to 1.33, and the ultrasonic wave at the time of measurement set to be ineffective. In addition, in the obtained cumulative particle size distribution curve ranging from 0% to 100%, the value of the particle diameter at a point at which the cumulative volume from the fine particle side reached 90% was obtained as a 90% cumulative volume particle size ($D_{90}$) ($\mu$m), the value of the particle diameter at a point at which the cumulative volume reached 50% was obtained as a 50% cumulative volume particle size ($D_{50}$) ($\mu$m), and the value of the particle diameter at a point at which the cumulative volume reached 10% was obtained as a 10% cumulative volume particle size ($D_{10}$) ($\mu$m).

<<(3) Measurement of ratio ($\beta/\gamma$)>>

The powder X-ray diffraction measurement of the precursor powder was carried out using an X-ray diffractometer (Ultima IV manufactured by Rigaku Corporation). The obtained precursor powder was loaded into a dedicated substrate, and the measurement was carried out using a Cu-Ka radiation source under conditions of a sampling width of 0.02°, and a scan speed of 4 °/min, thereby obtaining a powder X-ray diffraction pattern.

Using an integrated X-ray powder diffraction pattern software JADE, the ratio ($\beta/\gamma$) of the integrated intensity $\beta$ of a peak within a range of a diffraction angle $2\theta = 33.5 \pm 1°$ to the integrated intensity $\gamma$ of a peak present within a range of a diffraction angle $2\theta = 38.5 \pm 1°$ is calculated from the powder X-ray diffraction pattern.

<<Composition analysis>>

The composition analysis of a lithium composite metal oxide powder, hydroxide raw material powder, or precursor that was produced by a method described below was carried out using an inductively coupled plasma emission spectrometer (manufactured by SII NanoTechnology Inc., SPS 3000) after dissolving the obtained powder in hydrochloric acid.

<Production of lithium secondary battery positive electrode>

A paste-form positive electrode mixture was prepared by adding a positive electrode active material that was a lithium composite metal oxide obtained by a production method described below, a conductive material (acetylene black), and a binder (PVdF) so as to obtain a composition of the lithium composite metal oxide (positive electrode active material), the conductive material, and the binder in a mass ratio of 92:5:3 and kneading the components. At the time of preparing the positive electrode mixture, N-methyl-2-pyrrolidone was used as an organic solvent.

The obtained positive electrode mixture was applied to an Al foil having a thickness of 40 $\mu$m, which was to serve as a current collector, and dried in a vacuum at 150°C for eight hours, thereby obtaining a lithium secondary battery positive electrode. The electrode area of the lithium secondary battery positive electrode was set to 1.65 cm$^2$.

<Production of lithium secondary battery (coin-type half cell)>

The following operation was carried out in a glove box under an argon atmosphere.

The lithium secondary battery positive electrode produced in the section <Production of lithium secondary battery positive electrode> was placed on the lower lid of a part for a coin-type battery R2032 (manufactured by Hohsen Corp.) with the aluminum foil surface facing downward, and a separator (polyethylene porous film) was placed on the lithium secondary battery positive electrode. An electrolytic solution (300 $\mu$l) was poured thereinto. As the electrolytic solution, LiPF$_6$ dissolved in a liquid mixture of ethylene carbonate (hereinafter, referred to as EC in some cases), dimethyl carbonate (hereinafter, referred to as DMC in some cases), and ethyl methyl carbonate (hereinafter, referred to as EMC in some cases) at a volume ratio of 30:35:35 to a concentration of 1.0 mol/l (hereinafter, expressed as LiPF$_6$/EC + DMC + EMC) was used.

Next, metal lithium was used as a negative electrode, and the negative electrode was placed on the upper side of the laminated film separator. An upper lid was placed through a gasket and caulked using a caulking machine, thereby producing a lithium secondary battery (coin-type half cell R2032; hereinafter, referred to as the "half cell" in some cases).

. Charge and discharge test

A charge and discharge test was carried out using the half cell produced by the above-described method under conditions described below, and the initial charge and discharge efficiency was calculated.

<Charge and discharge test>

(With 1- y - z - w $\geq$ 0.8 in composition formula (II)) Test temperature: 25°C

Maximum charging voltage: 4.35 V, charging time: six hours, charging current: 0.2 CA, constant current constant voltage charging
Minimum discharging voltage: 2.8 V, discharging time: five hours, discharging current: 0.2 CA, constant current discharging
(With 1- y - z - w < 0.8 in composition formula (II)) Test temperature: 25°C
Maximum charging voltage: 4.3 V, charging time: six hours, charging current: 0.2 CA, constant current constant voltage charging
Minimum discharging voltage: 2.5 V, discharging time: five hours, discharging current: 0.2 CA, constant current discharging

<Calculation of initial charge and discharge efficiency>

The initial charge and discharge efficiency was obtained from the charge capacity and the discharge capacity during charging and discharging under the above-described conditions based on the following calculation formula. The "initial efficiency" in Table 2 is the initial charge and discharge efficiency.

Initial charge and discharge efficiency (%)

= initial discharge capacity (mAh/g)/initial charge capacity (mAh/g) $\times$ 100

. Discharge rate test

A discharge rate test was carried out using the half cell produced by the above-described method under conditions described below, and the discharge rate characteristics were calculated in the discharge rate test.

<Charge and discharge test>

(With 1- y - z - w ≥ 0.8 in composition formula (II)) Test temperature: 25°C

Maximum charging voltage: 4.35 V, charging current: 1 CA, constant current constant voltage charging
Minimum discharging voltage: 2.8 V, discharging current: 1 CA or 10 CA, constant current discharging
(With 1- y - z - w < 0.8 in composition formula (II)) Test temperature: 25°C
Maximum charging voltage: 4.3 V, charging current: 1 CA, constant current constant voltage charging
Minimum discharging voltage: 2.5 V, discharging current: 1 CA or 10 CA, constant current discharging

<Calculation of discharge rate characteristics>

A 10CA/1 CA discharge capacity ratio was obtained using the discharge capacity at the time of constant current discharging the lithium secondary battery at 1 CA and the discharge capacity at the time of constant current discharging the lithium secondary battery at 10 CA from the following formula and used as an index for the discharge rate characteristics. The higher the value of the discharge rate characteristic, the higher the output of the lithium secondary battery.

• Discharge rate characteristics

$$\text{Discharge rate characteristics (\%)}$$
$$= \text{Discharge capacity at 10 CA (mAh/g)/discharge capacity at 1 CA (mAh/g)} \times 100$$

<<Example 1>>

1. Production of precursor (co-precipitate) of lithium composite metal oxide

After water was poured into a reaction vessel including a stirrer and an overflow pipe, a sodium hydroxide aqueous solution was added thereto, and the liquid temperature was held at 70°C.
A nickel sulfate aqueous solution, a cobalt sulfate aqueous solution, and a manganese sulfate aqueous solution were mixed together such that the atomic ratio of nickel atoms, cobalt atoms, and manganese atoms reached 88:8:4, thereby preparing a liquid raw material mixture.
Next, the raw material mixture solution and an ammonium sulfate aqueous solution, as a complexing agent, were continuously added into the reaction vessel under stirring. A sodium hydroxide aqueous solution was timely added dropwise such that the pH of the solution in the reaction vessel reached 11.39 (value measured at a liquid temperature of the aqueous solution of 40°C), and nickel-containing composite metal hydroxide particles were obtained.
After that, the nickel-containing composite metal hydroxide particles were washed, dehydrated, washed, dehydrated, isolated, and dried, thereby obtaining a hydroxide raw material powder 1. Particle size distribution measurement and a composition analysis were carried out on the hydroxide raw material powder 1. The results are shown in Table 1.
The obtained hydroxide raw material powder 1 was pulverized using a jet mill at a pulverization gas pressure set to 0.40 MPa, thereby obtaining a precursor 1. On the precursor 1, a composition analysis, powder X-ray diffraction measurement, and particle size distribution measurement were carried out. Individual physical properties of the precursor 1 are shown in Table 2.

2. Production and evaluation of lithium composite metal oxide

The obtained precursor 1, lithium hydroxide weighed such that the amount (mol) of Li reached 1.15 with respect to the total amount (mol) of 1 of Ni, Mn, and Co contained in the obtained precursor 1, and potassium sulfate weighed such that the amount of potassium sulfate reached 0.1 (mol/mol), that is, 10 (mol%) with respect to the total amount (mol) of lithium hydroxide and potassium sulfate, which was an inert melting agent, were mixed together with a mortar, thereby obtaining a mixture.

Next, the obtained mixture was held and heated at 760°C for 10 hours in an oxygen atmosphere and then cooled to room temperature, thereby obtaining a calcined product 1.

The obtained calcined product 1 was pulverized, dispersed in pure water (5°C), and then dehydrated.

Furthermore, the calcined product 1 was washed using pure water adjusted to a liquid temperature of 5°C and then dehydrated.

After that, the calcined product 1 was dried at 150°C, thereby obtaining a powder-form lithium composite metal oxide 1.

As a result of the composition analysis of the obtained lithium composite metal oxide 1, $x = 0.04$, $y = 0.08$, $z = 0.04$, $w = 0$ in the composition formula (II).

3. Charge and discharge test of non-aqueous electrolyte secondary battery

As a result of producing a coin-type battery using the lithium composite metal oxide 1 and carrying out a charge and discharge test, the initial charge and discharge efficiency was 87.5%, and the discharge rate characteristics were 37.7%.

«Example 2»

1. Production of precursor (co-precipitate) of lithium composite metal oxide

The hydroxide raw material powder 1 obtained in the process of Example 1 was pulverized using a counter jet mill by setting the pulverization gas pressure to 0.59 MPa, the supply speed to 2 kg/hr, the classification rotation speed to 17000 rpm, and the air volume to 1.2 $m^3$/min, thereby obtaining a precursor 2. On the precursor 2, a composition analysis, powder X-ray diffraction measurement, and particle size distribution measurement were carried out. Individual physical properties of the precursor 2 are shown in Table 2.

2. Production and evaluation of lithium composite metal oxide

The obtained precursor 2, lithium hydroxide weighed such that the amount (mol) of Li reached 1.15 with respect to the total amount (mol) of 1 of Ni, Mn, and Co contained in the obtained precursor 2, and potassium sulfate weighed such that the amount of potassium sulfate reached 0.1 (mol/mol), that is, 10 (mol%) with respect to the total amount (mol) of lithium hydroxide and potassium sulfate, which was an inert melting agent, were mixed together with a mortar, thereby obtaining a mixture.

Next, the obtained mixture was held and heated at 760°C for 10 hours in an oxygen atmosphere and then cooled to room temperature, thereby obtaining a calcined product 2.

The obtained calcined product 2 was pulverized, dispersed in pure water (5°C), and then dehydrated.

Furthermore, the calcined product 2 was washed using pure water adjusted to a liquid temperature of 5°C and then dehydrated.

After that, the calcined product 2 was heated at 80°C for 15 hours and then continuously heating at 150°C for nine hours to dry the calcined product 2, thereby obtaining a powder-form lithium composite metal oxide 2.

As a result of the composition analysis of the obtained lithium composite metal oxide 2, $x = 0.05$, $y = 0.08$, $z = 0.04$, $w = 0$ in the composition formula (II).

3. Charge and discharge test of non-aqueous electrolyte secondary battery

As a result of producing a coin-type battery using the lithium composite metal oxide 2 and carrying out a charge and discharge test, the initial charge and discharge efficiency was 85.7%, and the discharge rate characteristics were 44.6%.

«Example 3»

1. Production of precursor (co-precipitate) of lithium composite metal oxide

The hydroxide raw material powder 1 obtained in the process of Example 1 was pulverized using a counter jet mill by setting the pulverization gas pressure to 0.59 MPa, the supply speed to 2 kg/hr, the classification rotation speed to 17000 rpm, and the air volume to 1.2 $m^3$/min, thereby obtaining a precursor 3. On the precursor 3, a composition analysis, powder X-ray diffraction measurement, and particle size distribution measurement were carried out. Individual physical properties of the precursor 3 are shown in Table 2.

2. Production and evaluation of lithium composite metal oxide

The obtained precursor 3 and lithium hydroxide weighed such that the amount (mol) of Li with respect to the total amount (mol) of 1 of Ni, Mn, and Co contained in the obtained precursor 3 reached 1.08 were mixed together with a mortar, thereby obtaining a mixture.

Next, a calcined product 3 obtained by holding and heating the obtained mixture at 760°C for six hours in an oxygen atmosphere and then cooling the mixture to room temperature was pulverized, thereby obtaining a powder-form lithium composite metal oxide 3.

As a result of the composition analysis of the obtained lithium composite metal oxide 3, $x = 0.04$, $y = 0.08$, $z = 0.04$, $w = 0$ in the composition formula (II).

3. Charge and discharge test of non-aqueous electrolyte secondary battery

As a result of producing a coin-type battery using the lithium composite metal oxide 3 and carrying out a charge and discharge test, the initial charge and discharge efficiency was 91.9%, and the discharge rate characteristics were 55.9%.

«Example 4»

1. Production of precursor (co-precipitate) of lithium composite metal oxide

The hydroxide raw material powder 1 obtained in the process of Example 1 was pulverized using a counter jet mill by setting the pulverization gas pressure to 0.59 MPa, the supply speed to 2 kg/hr, the classification rotation speed to 17000 rpm, and the air volume to 1.2 m$^3$/min, thereby obtaining a precursor 4. On the precursor 4, a composition analysis, powder X-ray diffraction measurement, and particle size distribution measurement were carried out. Individual physical properties of the precursor 4 are shown in Table 2.

2. Production and evaluation of lithium composite metal oxide

The obtained precursor 4 and lithium hydroxide weighed such that the amount (mol) of Li with respect to the total amount (mol) of 1 of Ni, Mn, and Co contained in the obtained precursor 4 reached 1.08 were mixed together with a mortar, thereby obtaining a mixture.

Next, a calcined product 4 obtained by holding and heating the obtained mixture at 820°C for six hours in an oxygen atmosphere and then cooling the mixture to room temperature was pulverized, thereby obtaining a powder-form lithium composite metal oxide 4.

As a result of the composition analysis of the obtained lithium composite metal oxide 4, $x = 0.04$, $y = 0.08$, $z = 0.04$, $w = 0$ in the composition formula (II).

3. Charge and discharge test of non-aqueous electrolyte secondary battery

As a result of producing a coin-type battery using the lithium composite metal oxide 4 and carrying out a charge and discharge test, the initial charge and discharge efficiency was 89.8%, and the discharge rate characteristics were 41.6%.

<<Example 5>>

1. Production of precursor (co-precipitate) of lithium composite metal oxide

After water was poured into a reaction vessel including a stirrer and an overflow pipe, a sodium hydroxide aqueous solution was added thereto, and the liquid temperature was held at 30°C.

A nickel sulfate aqueous solution, a cobalt sulfate aqueous solution, and a manganese sulfate aqueous solution were mixed together such that the atomic ratio of nickel atoms, cobalt atoms, and manganese atoms reached 50:20:30, thereby preparing a liquid raw material mixture.

Next, the raw material mixture solution and an ammonium sulfate aqueous solution, as a complexing agent, were continuously added into the reaction vessel under stirring. A sodium hydroxide aqueous solution was timely added dropwise such that the pH of the solution in the reaction vessel reached 12.1 (value measured at a liquid temperature of the aqueous solution of 40°C), and nickel-containing composite metal hydroxide particles were obtained.

After that, the nickel-containing composite metal hydroxide particles were washed, dehydrated, washed, dehydrated, isolated, and dried, thereby obtaining a hydroxide raw material powder 2. Particle size distribution measurement and a composition analysis were carried out on the hydroxide raw material powder 2. The results are shown in Table 1.

The obtained hydroxide raw material powder 2 was pulverized using a jet mill at a pulverization gas pressure set to 0.40 MPa, thereby obtaining a precursor 5. On the precursor 5, a composition analysis, powder X-ray diffraction measurement, and particle size distribution measurement were carried out. Individual physical properties of the precursor 5 are shown in Table 2.

2. Production and evaluation of lithium composite metal oxide

The obtained precursor 5 and lithium hydroxide weighed such that the amount (mol) of Li with respect to the total amount (mol) of 1 of Ni, Mn, and Co contained in the obtained precursor 5 reached 1.26 were mixed together with a mortar, thereby obtaining a mixture.

Next, the obtained mixture was held and heated at 940°C for five hours in an oxygen atmosphere and then cooled to room temperature, thereby obtaining a calcined product 5.

The obtained calcined product 5 was pulverized, dispersed in pure water (5°C), and then dehydrated.

Furthermore, the dehydrated calcined product 5 was washed using pure water adjusted to a liquid temperature of 5°C and dehydrated.

After that, the calcined product 5 was heated at 80°C for 15 hours and continuously heating at 150°C for nine hours to dry the calcined product 5, thereby obtaining a powder-form lithium composite metal oxide 5.

As a result of the composition analysis of the obtained lithium composite metal oxide 5, $x = 0.2$, $y = 0.20$, $z = 0.30$, $w = 0$ in the composition formula (II).

3. Charge and discharge test of non-aqueous electrolyte secondary battery

As a result of producing a coin-type battery using the lithium composite metal oxide 5 and carrying out a charge and discharge test, the initial charge and discharge efficiency was 86.1%, and the discharge rate characteristics were 71.7%.

<<Example 6>>

1. Production of precursor (co-precipitate) of lithium composite metal oxide

The hydroxide raw material powder 2 obtained in the process of Example 5 was pulverized using a jet mill at a pulverization gas pressure set to 0.40 MPa, thereby obtaining a precursor 6.

On the precursor 6, a composition analysis, powder X-ray diffraction measurement, and particle size distribution measurement were carried out. Individual physical properties of the precursor 6 are shown in Table 2.

2. Production and evaluation of lithium composite metal oxide

The obtained precursor 6, lithium hydroxide, and potassium sulfate were weighed as described below and mixed with a mortar, thereby obtaining a mixture.

The lithium hydroxide was weighed such that the amount (mol) of Li with respect to the total amount (mol) of 1 of Ni, Mn, and Co contained in the precursor 6 reached 1.26.

The potassium sulfate was weighed such that the amount of the potassium sulfate with respect to the total amount (mol) of the lithium hydroxide and the potassium sulfate, which was an inert melting agent reached 0.02 (mol/mol), that is, 2 (mol%).

Next, the obtained mixture was held and heated at 940°C for five hours in an oxygen atmosphere, then, cooled to room temperature, and pulverized, thereby obtaining a calcined product 6.

The obtained calcined product 6 was further pulverized, dispersed in pure water (5°C), and then dehydrated.

Furthermore, the dehydrated calcined product 6 was washed using pure water adjusted to a liquid temperature of 5°C and then dehydrated.

After that, the calcined product 6 was heated at 80°C for 15 hours and then continuously heating at 150°C for nine hours to dry the calcined product 6, thereby obtaining a powder-form lithium composite metal oxide 6.

As a result of the composition analysis of the obtained lithium composite metal oxide 6, $x = 0.2$, $y = 0.20$, $z = 0.30$, $w = 0$ in the composition formula (II).

3. Charge and discharge test of non-aqueous electrolyte secondary battery

As a result of producing a coin-type battery using the lithium composite metal oxide 6 and carrying out a charge and discharge test, the initial charge and discharge efficiency was 85.5%, and the discharge rate characteristics were 83.2%.

<<Comparative Example 1>>

1. Production of precursor (co-precipitate) of lithium composite metal oxide

The hydroxide raw material powder 1 obtained in the process of Example 1 was pulverized using a jet mill at a pulverization gas pressure set to 0.80 MPa, thereby obtaining a precursor 7. On the precursor 7, a composition analysis, powder X-ray diffraction measurement, and particle size distribution measurement were carried out. Individual physical properties of the precursor 7 are shown in Table 2.

2. Production and evaluation of lithium composite metal oxide

The obtained precursor 7, lithium hydroxide weighed such that the amount (mol) of Li reached 1.15 with respect to the total amount (mol) of 1 of Ni, Mn, and Co contained in the obtained precursor 7, and potassium sulfate weighed such that the amount of potassium sulfate reached 0.1 (mol/mol), that is, 10 (mol%) with respect to the total amount (mol) of lithium hydroxide and potassium sulfate, which was an inert melting agent, were mixed together with a mortar, thereby obtaining a mixture.
Next, the obtained mixture was held and heated at 760°C for 10 hours in an oxygen atmosphere and then cooled to room temperature, thereby obtaining a calcined product 7.
The obtained calcined product 7 was pulverized, dispersed in pure water (5°C), and then dehydrated.
Furthermore, the dehydrated calcined product 7 was washed using pure water adjusted to a liquid temperature of 5°C and then dehydrated.
Furthermore, the calcined product 7 was dried at 150°C, thereby obtaining a powder-form lithium composite metal oxide 7.
As a result of the composition analysis of the obtained lithium composite metal oxide 7, x = 0.05, y = 0.08, z = 0.04, w = 0 in the composition formula (II).

3. Charge and discharge test of non-aqueous electrolyte secondary battery

As a result of producing a coin-type battery using the lithium composite metal oxide 7 and carrying out a charge and discharge test, the initial charge and discharge efficiency was 86.9%, and the discharge rate characteristics were 37.0%.

<<Comparative Example 2>>

1. Production of precursor (co-precipitate) of lithium composite metal oxide

The hydroxide raw material powder 1 obtained in the process of Example 1 was used as a precursor 8. On the precursor 8, a composition analysis, powder X-ray diffraction measurement, and particle size distribution measurement were carried out. Individual physical properties of the precursor 8 are shown in Table 2.

2. Production and evaluation of lithium composite metal oxide

The obtained precursor 8, lithium hydroxide weighed such that the amount (mol) of Li reached 1.15 with respect to the total amount (mol) of 1 of Ni, Mn, and Co contained in the obtained precursor 8, and potassium sulfate weighed such that the amount of potassium sulfate reached 0.1 (mol/mol), that is, 10 (mol%) with respect to the total amount (mol) of lithium hydroxide and potassium sulfate, which was an inert melting agent, were mixed together with a mortar, thereby obtaining a mixture.
Next, the obtained mixture was held and heated at 760°C for 10 hours in an oxygen atmosphere and then cooled to room temperature, thereby obtaining a calcined product 8.
The obtained calcined product 8 was pulverized, dispersed in pure water (5°C), and then dehydrated.
Furthermore, the dehydrated calcined product 8 was washed using pure water adjusted to a liquid temperature of 5°C and then dehydrated.

After that, the calcined product 8 was dried at 150°C, thereby obtaining a powder-form lithium composite metal oxide 8.

As a result of the composition analysis of the obtained lithium composite metal oxide 8, x = 0.05, y = 0.08, z = 0.04, w = 0 in the composition formula (II).

3. Charge and discharge test of non-aqueous electrolyte secondary battery

As a result of producing a coin-type battery using the lithium composite metal oxide 8 and carrying out a charge and discharge test, the initial charge and discharge efficiency was 89.6%, and the discharge rate characteristics were 34.2%.

<<Comparative Example 3>>

1. Production of precursor (co-precipitate) of lithium composite metal oxide

The hydroxide raw material powder 1 obtained in the process of Example 1 was used as a precursor 9. On the precursor 9, a composition analysis, powder X-ray diffraction measurement, and particle size distribution measurement were carried out. Individual physical properties of the precursor 9 are shown in Table 2.

2. Production and evaluation of lithium composite metal oxide

The obtained precursor 9 and lithium hydroxide weighed such that the amount (mol) of Li with respect to the total amount (mol) of 1 of Ni, Mn, and Co contained in the obtained precursor 9 reached 1.08 were mixed together with a mortar, thereby obtaining a mixture.

Next, a calcined product 9 obtained by holding and heating the obtained mixture at 820°C for six hours in an oxygen atmosphere and then cooling the mixture to room temperature was pulverized, thereby obtaining a powder-form lithium composite metal oxide 9.

As a result of the composition analysis of the obtained lithium composite metal oxide 9, x = 0.04, y = 0.08, z = 0.04, w = 0 in the composition formula (II).

3. Charge and discharge test of non-aqueous electrolyte secondary battery

As a result of producing a coin-type battery using the lithium composite metal oxide 9 and carrying out a charge and discharge test, the initial charge and discharge efficiency was 88.1%, and the discharge rate characteristics were 23.6%.

<<Comparative Example 4>>

1. Production of precursor (co-precipitate) of lithium composite metal oxide

After water was poured into a reaction vessel including a stirrer and an overflow pipe, a sodium hydroxide aqueous solution was added thereto, and the liquid temperature was held at 50°C.

A nickel sulfate aqueous solution, a cobalt sulfate aqueous solution, and a manganese sulfate aqueous solution were mixed together such that the atomic ratio of nickel atoms, cobalt atoms, and manganese atoms reached 88:8:4, thereby preparing a liquid raw material mixture.

Next, the raw material mixture solution and an ammonium sulfate aqueous solution, as a complexing agent, were continuously added into the reaction vessel under stirring. A sodium hydroxide aqueous solution was timely added dropwise such that the pH of the solution in the reaction vessel reached 12.06 (value measured at a liquid temperature of the aqueous solution of 40°C) to obtain nickel-containing composite metal hydroxide particles, and the nickel-containing composite metal hydroxide particles were washed, then, dehydrated, washed, dehydrated, isolated, and dried, thereby obtaining a hydroxide raw material powder 3 as a precursor 10. On the precursor 10, a composition analysis, powder X-ray diffraction measurement, and particle size distribution measurement were carried out. The results are shown in Table 1 and Table 2.

2. Production and evaluation of lithium composite metal oxide

The obtained precursor 10, lithium hydroxide weighed such that the amount (mol) of Li reached 1.15 with respect to the total amount (mol) of 1 of Ni, Mn, and Co contained in the obtained precursor 10, and potassium sulfate weighed such that the amount of potassium sulfate reached 0.1 (mol/mol), that is, 10 (mol%) with respect to the total amount (mol) of lithium hydroxide and potassium sulfate, which was an inert melting agent, were mixed together with a mortar, thereby obtaining a mixture.

Next, a calcined product 10 obtained by holding and heating the obtained mixture at 800°C for 10 hours in an oxygen atmosphere and then cooling the mixture to room temperature was pulverized, thereby obtaining a powder-form lithium composite metal oxide 10.

As a result of the composition analysis of the obtained lithium composite metal oxide 10, x = 0.01, y = 0.08, z = 0.04, w = 0 in the composition formula (II).

3. Charge and discharge test of non-aqueous electrolyte secondary battery

As a result of producing a coin-type battery using the lithium composite metal oxide 10 and carrying out a charge and discharge test, the initial charge and discharge efficiency was 83.8%, and the discharge rate characteristics were 52.2%.

<<Comparative Example 5>>

1. Production of precursor (co-precipitate) of lithium composite metal oxide

After water was poured into a reaction vessel including a stirrer and an overflow pipe, a sodium hydroxide aqueous solution was added thereto, and the liquid temperature was held at 30°C.

A nickel sulfate aqueous solution, a cobalt sulfate aqueous solution, and a manganese sulfate aqueous solution were mixed together such that the atomic ratio of nickel atoms, cobalt atoms, and manganese atoms reached 50:20:30, thereby preparing a liquid raw material mixture.

Next, the raw material mixture solution and an ammonium sulfate aqueous solution, as a complexing agent, were continuously added into the reaction vessel under stirring. A sodium hydroxide aqueous solution was timely added dropwise such that the pH of the solution in the reaction vessel reached 12.1 (value measured at a liquid temperature of the aqueous solution of 40°C) to obtain nickel-containing composite metal hydroxide particles, and the nickel-containing composite metal hydroxide particles were washed, then, dehydrated, washed, dehydrated, isolated, and dried, thereby obtaining the hydroxide raw material powder 2 as a precursor 11. On the precursor 11, a composition analysis, powder X-ray diffraction measurement, and particle size distribution measurement were carried out. The results are shown in Table 1 and Table 2.

2. Production and evaluation of lithium composite metal oxide

The obtained precursor 11, lithium hydroxide weighed such that the amount (mol) of Li reached 1.26 with respect to the total amount (mol) of 1 of Ni, Mn, and Co contained in the obtained precursor 11, and potassium sulfate weighed such that the amount of potassium sulfate reached 0.1 (mol/mol), that is, 10 (mol%) with respect to the total amount (mol) of lithium hydroxide and potassium sulfate, which was an inert melting agent, were mixed together with a mortar, thereby obtaining a mixture.

Next, a calcined product 11 obtained by holding and heating the obtained mixture at 960°C for five hours in an oxygen atmosphere and then cooling the mixture to room temperature was pulverized.

The obtained calcined product 11 was pulverized and dispersed in pure water (5°C). The slurry concentration was set to 30 mass%, and the slurry was stirred for 10 minutes and then dehydrated.

Furthermore, the slurry was washed with a shower water that weighed double the dehydrated calcined product 11 using pure water adjusted to a liquid temperature of 5°C and then dehydrated.

After that, the calcined product 11 was heated at 80°C for 15 hours and then continuously heating at 150°C for nine hours to dry the calcined product 11, thereby obtaining a powder-form lithium composite metal oxide 11.

As a result of the composition analysis of the obtained lithium composite metal oxide 11, x = 0.2, y = 0.20, z = 0.30, w = 0 in the composition formula (II).

3. Charge and discharge test of non-aqueous electrolyte secondary battery

As a result of producing a coin-type battery using the lithium composite metal oxide 11 and carrying out a charge and discharge test, the initial charge and discharge efficiency was 81.8%, and the discharge rate characteristics were 56.1%.

Table 1 shows the compositions (A), the 50% cumulative volume particle sizes ($D_{50}$) (B) obtained from the particle size distribution measurement, the ratios ($D_{90}/D_{10}$) of the 90% cumulative volume particle size ($D_{90}$) obtained

from the particle size distribution measurement to the 10% cumulative volume particle size ($D_{10}$) obtained from the particle size distribution measurement (C), the 10% cumulative volume particle size ($D_{10}$) obtained from the particle size distribution measurement, and the 90% cumulative volume particle size ($D_{90}$) obtained from the particle size distribution measurement of the hydroxide raw material powders 1 to 4 obtained in Examples 1 to 6 and Comparative Examples 1 to 5.

Table 2 shows the pulverization conditions of the hydroxide raw material powders 1 to 4 obtained in Examples 1 to 6 and Comparative Examples 1 to 5, and the values of the integrated intensities $\alpha$, the integrated intensities $\beta$, and the integrated intensities y obtained from the powder X-ray diffraction measurement, the ratios ($\alpha/\beta$) of the integrated intensity $\alpha$ to the integrated intensity $\beta$ obtained from the powder X-ray diffraction measurement (1), the 10% cumulative volume particle sizes ($D_{10}$) obtained from the particle size distribution measurement (2), the ratios ($\beta/\gamma$) of the integrated intensity $\beta$ to the integrated intensity $\gamma$ obtained from the powder X-ray diffraction measurement (3), the 50% cumulative volume particle sizes ($D_{50}$) obtained from the particle size distribution measurement (4), the 90% cumulative volume particle sizes ($D_{90}$) obtained from the particle size distribution measurement (5), and the compositions of the precursors 1 to 11 obtained in Examples 1 to 6 and Comparative Examples 1 to 5. In addition, Table 2 shows the ratios (A/B) of the precursors 1 to 11 obtained in Examples 1 to 6 and Comparative Examples 1 to 5, where A represents the ratio ($\alpha/\beta$) before the pulverization step and B represents the ratio ($\alpha/\beta$) after the pulverization step at the time of obtaining the ratios ($\alpha/\beta$) of the integrated intensity $\alpha$ to the integrated intensity $\beta$ each obtained from the powder X-ray diffraction measurement before and after the pulverization step.

Table 3 shows the calcining conditions in Examples 1 to 6 and Comparative Examples 1 to 5, and the initial charge and discharge efficiencies and the discharge rate characteristics obtained by the charge and discharge tests using the the coin-type half cells produced using the positive electrode active materials, which are the lithium metal composite oxides 1 to 11 obtained in Examples 1 to 6 and Comparative Examples 1 to 5.

[Table 1]

| | Hydroxide raw material powder | Physical property values of hydroxide raw material powder | | | | | | |
| --- | --- | --- | --- | --- | --- | --- | --- | --- |
| | | (A) | | | (B) | (C) | | |
| | | a | b | c | $D_{50}$ (μm) | $D_{90}/D_{10}$ | $D_{10}$ (μm) | $D_{90}$ (μm) |
| Example 1 | 1 | 0.08 | 0.04 | 0 | 15.5 | 2.8 | 9.2 | 25.7 |
| Example 2 | 1 | 0.08 | 0.04 | 0 | 15.5 | 2.8 | 9.2 | 25.7 |
| Example 3 | 1 | 0.08 | 0.04 | 0 | 15.5 | 2.8 | 9.2 | 25.7 |
| Example 4 | 1 | 0.08 | 0.04 | 0 | 15.5 | 2.8 | 9.2 | 25.7 |
| Example 5 | 2 | 0.2 | 0.3 | 0 | 3.9 | 3.0 | 2.2 | 6.5 |
| Example 6 | 2 | 0.2 | 0.3 | 0 | 3.9 | 3.0 | 2.2 | 6.5 |
| Comparative Example 1 | 1 | 0.08 | 0.04 | 0 | 15.5 | 2.8 | 9.2 | 25.7 |
| Comparative Example 2 | 1 | 0.08 | 0.04 | 0 | 15.5 | 2.8 | 9.2 | 25.7 |
| Comparative Example 3 | 1 | 0.08 | 0.04 | 0 | 15.5 | 2.8 | 9.2 | 25.7 |
| Comparative Example 4 | 3 | 0.08 | 0.04 | 0 | 2.9 | 2.8 | 1.7 | 4.7 |
| Comparative Example 5 | 2 | 0.2 | 0.3 | 0 | 3.9 | 3.0 | 2.2 | 6.5 |

[Table 2]

| | Precursor | Pulverization method | Pulverization pressure (MPa) | Supply speed (kg/hr) | Classification rotation speed (rpm) | Air volume (m³/min) | Integrated intensity α | Integrated intensity β | Integrated intensity γ | (1) Ratio (α/β) | (2) D10 | (3) Ratio (β/γ) | (4) D50 | (5) D90 | a | b | c | (B/A) | x | y | z | w |
|---|---|---|---|---|---|---|---|---|---|---|---|---|---|---|---|---|---|---|---|---|---|---|
| Example 1 | 1 | Jet mill | 0.40 | 6 | | | 77244 | 24966 | 61151 | 3.09 | 1.4 | 0.408 | 4.6 | 9.3 | 0.08 | 0.04 | 0 | 1.7 | 0.04 | 0.08 | 0.04 | 0 |
| Example 2 | 2 | Counter jet mill | 0.59 | 2 | 17000 | 1.2 | 87467 | 20773 | 53999 | 4.21 | 0.9 | 0.385 | 1.7 | 3.3 | 0.08 | 0.04 | 0 | 1.7 | 0.05 | 0.08 | 0.04 | 0 |
| Example 3 | 3 | Counter jet mill | 0.59 | 2 | 17000 | 1.2 | 87467 | 20773 | 53999 | 4.21 | 0.9 | 0.385 | 1.7 | 3.3 | 0.08 | 0.04 | 0 | 1.7 | 0.04 | 0.08 | 0.04 | 0 |
| Example 4 | 4 | Counter jet mill | 0.59 | 2 | 17000 | 1.2 | 87467 | 20773 | 53999 | 4.21 | 0.9 | 0.385 | 1.7 | 3.3 | 0.08 | 0.04 | 0 | 1.7 | 0.04 | 0.08 | 0.04 | 0 |
| Example 5 | 5 | Jet mill | 0.40 | 6 | | | 43462 | 7858 | 16445 | 5.53 | 2.0 | 0.478 | 3.1 | 4.8 | 0.2 | 0.3 | 0 | 1.2 | 0.2 | 0.2 | 0.3 | 0 |
| Example 6 | 6 | Jet mill | 0.40 | 6 | | | 43462 | 7858 | 16445 | 5.53 | 2.0 | 0.478 | 3.1 | 4.8 | 0.2 | 0.3 | 0 | 1.2 | 0.2 | 0.2 | 0.3 | 0 |
| Comparative Example 1 | 7 | Jet mill | 0.80 | 6 | | | 112235 | 19060 | 51820 | 5.89 | 0.9 | 0.368 | 2.0 | 4.0 | 0.08 | 0.04 | 0 | 2.4 | 0.05 | 0.08 | 0.04 | 0 |
| Comparative Example 2 | 8 | None | - | - | - | - | 59960 | 24061 | 60530 | 2.49 | 9.2 | 0.398 | 15.5 | 25.7 | 0.08 | 0.04 | 0 | - | 0.05 | 0.08 | 0.04 | 0 |
| Comparative Example 3 | 9 | None | - | - | - | - | 59960 | 24061 | 60530 | 2.49 | 9.2 | 0.398 | 15.5 | 25.7 | 0.08 | 0.04 | 0 | - | 0.04 | 0.08 | 0.04 | 0 |
| Comparative Example 4 | 10 | None | - | - | - | - | 79409 | 27937 | 41094 | 2.84 | 1.7 | 0.680 | 2.9 | 4.7 | 0.08 | 0.04 | 0 | - | 0.01 | 0.08 | 0.04 | 0 |
| Comparative Example 5 | 11 | None | - | - | - | - | 44266 | 10004 | 18845 | 4.42 | 2.2 | 0.531 | 3.9 | 6.5 | 0.2 | 0.3 | 0 | - | 0.2 | 0.2 | 0.3 | 0 |

[Table 3]

| | | Calcining conditions | | | | Battery characteristics | |
|---|---|---|---|---|---|---|---|
| | | Calcining temperature (°C) | Calcining time (hours) | Li/Me prepared | $K_2SO_4$ (mol%) | Initial efficiency (%) | Discharge rate characteristics (%) |
| | Example 1 | 760 | 10 | 1.15 | 10 | 87.5 | 37.7 |
| | Example 2 | 760 | 10 | 1.15 | 10 | 85.7 | 44.6 |
| | Example 3 | 760 | 6 | 1.08 | 0 | 91.9 | 55.9 |
| | Example 4 | 820 | 6 | 1.08 | 0 | 89.8 | 41.6 |
| | Example 5 | 940 | 5 | 1.26 | 0 | 86.1 | 71.7 |
| | Example 6 | 940 | 5 | 1.26 | 2 | 85.5 | 83.2 |
| | Comparative Example 1 | 760 | 10 | 1.15 | 10 | 86.9 | 37.0 |
| | Comparative Example 2 | 760 | 10 | 1.15 | 10 | 89.6 | 34.2 |
| | Comparative Example 3 | 820 | 6 | 1.08 | 0 | 88.1 | 23.6 |
| | Comparative Example 4 | 800 | 10 | 1.15 | 10 | 83.8 | 52.2 |
| | Comparative Example 5 | 960 | 5 | 1.26 | 10 | 81.8 | 56.1 |

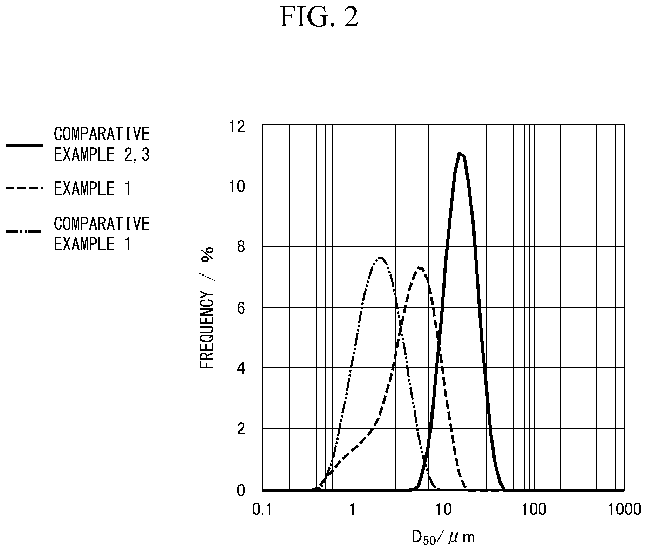

Fig. 2 shows particle size distribution graphs of the precursor 1 of Example 1 and the precursors 7 to 9 of Comparative Examples 1 to 3. In Example 1 to which the present invention was applied, $D_{50}$ was 5 μm or less.

As shown in Table 3, in Examples 1 to 4, the initial charge and discharge efficiencies and the discharge rate characteristics were both favorable compared with Comparative Examples 1 to 4. Similarly, in Examples 5 and 6, the initial charge and discharge efficiencies and the discharge rate characteristics were both favorable compared with Comparative Example 5.

[Reference Signs List]

1:      Separator
2:      Positive electrode
3:      Negative electrode
4:      Electrode group
5:      Battery can
6:      Electrolytic solution
7:      Top insulator
8:      Sealing body
10:     Lithium secondary battery
21:     Positive electrode lead
31:     Negative electrode lead

**Claims**

1.  A positive electrode active material precursor for a lithium secondary battery, wherein the following requirements (1) and (2) are satisfied,

requirement (1): in powder X-ray diffraction measurement using a CuKα ray, α/β that is a ratio of an integrated intensity α of a peak present within a range of a diffraction angle 2θ = 19.2 ± 1° to an integrated intensity β of a peak present within a range of a diffraction angle 2θ = 33.5 ± 1° is 3.0 or more and 5.8 or less, and requirement (2): a 10% cumulative volume particle size $D_{10}$ obtained from particle size distribution measurement is 2 μm or less.

2. The positive electrode active material precursor for a lithium secondary battery according to Claim 1,

   wherein the following requirement (3) is further satisfied,
   requirement (3): in powder X-ray diffraction measurement using a CuKα ray, β/γ that is a ratio of the integrated intensity β of the peak present within the range of a diffraction angle 2θ = 33.5 ± 1° to an integrated intensity γ of a peak present within a range of a diffraction angle 2θ = 38.5 ± 1° is 0.370 or more and 0.500 or less.

3. The positive electrode active material precursor for a lithium secondary battery according to Claim 1 or 2,

   wherein the following requirement (4) is further satisfied,
   requirement (4): a 50% cumulative volume particle size $D_{50}$ obtained from the particle size distribution measurement is 5 μm or less.

4. The positive electrode active material precursor for a lithium secondary battery according to any one of Claims 1 to 3,

   wherein the following requirement (5) is further satisfied,
   requirement (5): a 90% cumulative volume particle size $D_{90}$ obtained from the particle size distribution measurement is 10 μm or less.

5. The positive electrode active material precursor for a lithium secondary battery according to any one of Claims 1 to 4, wherein the following formula (I) that represents mole ratios of metal elements is satisfied and, in the following formula (I), 0≤a≤0.4, 0≤b≤0.4, and 0≤c≤0.1 are satisfied,

$$Ni : Co : Mn : M^1 = (1 - a - b - c) : a : b : c \ldots \quad (I)$$

   (here, $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn).

6. A method for producing a positive electrode active material precursor for a lithium secondary battery, the method comprising:

   a pulverization step of pulverizing a raw material powder that satisfies the following requirements (A) to (C),
   requirement (A): the following formula (I) that represents mole ratios of metal elements is satisfied and, in the following formula (I), 0≤a≤0.4, 0≤b≤0.4, and 0≤c ≤0.1 are satisfied,
   requirement (B): a 50% cumulative volume particle size $D_{50}$ obtained from the particle size distribution measurement is 2 μm or more and 20 μm or less, and
   requirement (C): $D_{90}/D_{10}$ that is a ratio of a 90% cumulative volume particle size $D_{90}$ obtained from the particle size distribution measurement to a 10% cumulative volume particle size $D_{10}$ obtained from the particle size distribution measurement is 3 or less,

$$Ni : Co : Mn : M^1 = (1 - a - b - c) : a : b : c \ldots \quad (I)$$

   (here, $M^1$ represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn).

7. The method for producing a positive electrode active material precursor for a lithium secondary battery according to Claim 6,
   wherein, when powder X-ray diffraction measurement using a CuKα ray is carried out before and after the pulverization step, α/β that is a ratio of an integrated intensity α of a peak present within a range of a diffraction angle 2θ = 19.2 ± 1° to an integrated intensity β of a peak present within a range of a diffraction angle 2θ = 33.5 ± 1° is obtained from each measurement, the α/β before the pulverization step is represented by A, and the α/β after the pulverization step is represented by B, B/A that is a ratio between A and B is 1 or more and 2 or less.

8. The method for producing a positive electrode active material precursor for a lithium secondary battery according to Claim 6 or 7,
   wherein the pulverization step is carried out using a jet mill or a counter jet mill.

9. A method for producing a positive electrode active material for a lithium secondary battery, the method comprising:

   a step of mixing the positive electrode active material precursor for a lithium secondary battery according to any one of Claims 1 to 5 and a lithium compound to obtain a mixture; and
   a step of calcining the mixture.

10. The method for producing a positive electrode active material for a lithium secondary battery according to Claim 9, wherein the positive electrode active material for a lithium secondary battery is represented by the following composition formula (II),

$$Li[Li_x(Ni_{(1-y-z-w)}Co_yMn_zM_w)_{1-x}]O_2 ... \qquad (II)$$

(here, $-0.1 \leq x \leq 0.2$, $0 \leq y \leq 0.4$, $0 \leq z \leq 0.4$, $0 \leq w \leq 0.1$, and $y + z + w < 1$ are satisfied, and M represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn).

# FIG. 1A

# FIG. 1B

# FIG. 2

Legend:
- ——— COMPARATIVE EXAMPLE 2, 3
- ---- EXAMPLE 1
- —··— COMPARATIVE EXAMPLE 1

Y-axis: FREQUENCY / %
X-axis: $D_{50}/\mu m$

## INTERNATIONAL SEARCH REPORT

| International application No. |
|---|
| PCT/JP2019/050067 |

### A. CLASSIFICATION OF SUBJECT MATTER
C01G 53/00(2006.01)i; H01M 4/36(2006.01)i; H01M 4/505(2010.01)i; H01M 4/525(2010.01)i
FI: H01M4/525; H01M4/505; H01M4/36 Z; C01G53/00 A

According to International Patent Classification (IPC) or to both national classification and IPC

### B. FIELDS SEARCHED
Minimum documentation searched (classification system followed by classification symbols)
C01G53/00; H01M4/36; H01M4/505; H01M4/525

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2000-223122 A (SANYO ELECTRIC CO., LTD.) 11.08.2000 (2000-08-11) claims | 1–10 |
| A | JP 5-174823 A (HITACHI MAXELL, LTD.) 13.07.1993 (1993-07-13) claims, fig. 2-4 | 1–10 |
| A | WO 2004/051771 A1 (SEIMI CHEM CO., LTD.) 17.06.2004 (2004-06-17) claims, examples | 1–10 |
| A | JP 2018-505521 A (QUANTUMSCAPE CORPORATION) 22.02.2018 (2018-02-22) claims | 1–10 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 March 2020 (03.03.2020) | 17 March 2020 (17.03.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2019/050067

| Patent Documents referred in the Report | Publication Date | Patent Family | Publication Date |
|---|---|---|---|
| JP 2000-223122 A | 11 Aug. 2000 | (Family: none) | |
| JP 5-174823 A | 13 Jul. 1993 | (Family: none) | |
| WO 2004/051771 A1 | 17 Jun. 2004 | US 2005/0214645 A1 claims, examples AU 2003284501 A1 KR 10-2005-0084852 A CN 1717823 A TW 200423453 A | |
| JP 2018-505521 A | 22 Feb. 2018 | US 2016/0211517 A1 claims EP 3238290 A1 CN 107210419 A KR 10-2017-0100534 A | |

Form PCT/ISA/210 (patent family annex) (January 2015)

**EP 3 901 102 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018238845 A
- WO 2014061580 A

- JP 2002201028 A